# EUROPÄISCHE PATENTSCHRIFT

(11) **EP 4 313 500 B1**
(45) Veröffentlichungstag und Bekanntmachung des Hinweises auf die Patenterteilung: **19.02.2025**
(21) Anmeldenummer: 22717722.7
(22) Anmeldetag: 30.03.2022
(51) Int. Cl.: B25J 9/00

(54) **INDUSTRIEROBOTER**
INDUSTRIAL ROBOT
ROBOT INDUSTRIEL

(30) Priorität: 01.04.2021 DE 102021108472; 19.04.2021 DE 102021109857
(43) Veröffentlichungstag der Anmeldung: 07.02.2024
(73) Patentinhaber: Autonox Holding GmbH, 77731 Willstätt (DE)
(72) Erfinder: ILCH, Hartmut Herbert, 76530 Baden-Baden (DE)
(74) Vertreter: Geitz Patentanwälte PartG mbB
(86) Internationale Anmeldenummer: PCT/DE2022/100247
(87) Internationale Veröffentlichungsnummer: WO 2022/207039

(56) Entgegenhaltungen:
- EP-A1- 2 835 226
- US-A1- 2019 061 144
- ZHANG DAN ET AL: "Portable Multi-axis CNC: A 3-CRU Decoupled Parallel Robotic Manipulator", 10 November 2010, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 418 - 429, ISBN: 978-3-540-74549-5, XP047441009
- LUNG-WEN TSAI ET AL: "Comparison study of architectures of four 3 degree-of-freedom translational parallel manipulators", PROCEEDINGS OF THE 2001 IEEE INTERNATIONAL CONFERENCE ON ROBOTICS AND AUTOMATION. ICRA 2001. SEOUL, KOREA, MAY 21 - 26, 2001; [PROCEEDINGS OF THE IEEE INTERNATIONAL CONFERENCE ON ROBOTICS AND AUTOMATION], NEW YORK, NY : IEEE, US, vol. 2, 21 May 2001 (2001-05-21), pages 1283 - 1288, XP010550325, ISBN: 978-0-7803-6576-6
- DAN ZHANG ET AL: "Portable Multi-axis CNC: A 3-CRU Decoupled Parallel Robotic Manipulator", INTELLIGENT ROBOTICS AND APPLICATIONS - THIRD INTERNATIONAL CONFERENCE, ICIRA 2010, PROCEEDINGS - SPRINGER VERLAG, vol. 6424, 10 November 2010 (2010-11-10), pages 418 - 429, XP019156071, ISBN: 978-3-540-74549-5
- BRIOT SÉBASTIEN ET AL: "Pantopteron: a New Fully-Decoupled 3-DOF Translational Parallel Robot for Pick-and-Place Applications", JOURNAL OF MECHANISMS AND ROBOTICS, 1 January 2009 (2009-01-01), XP055939798, Retrieved from the Internet <URL:https://hal.archives-ouvertes.fr/hal-00451879/document> [retrieved on 20220707]

## Beschreibung

Die Erfindung geht aus von einem Industrieroboter mit Parallelkinematik, welcher mit einer Roboterbasis, mit einem als Aufnahme für einen Effektor dienenden Effektorträger und mit mehreren Betätigungsarmen zum Bewegen des Effektorträgers ausgestattet ist.

Derartige Industrieroboter mit Parallelkinematik dienen zum Bewegen, Positionieren und/ oder Bearbeiten eines Gegenstands im Raum. Sie sind mit einer ortsfest oder auf einer beweglichen Plattform angeordneten Roboterbasis und einem beweglichen Effektorträger zur Aufnahme eines Effektors, wie beispielsweise eines Greifers, eines Werkzeugs, einer Kamera oder eines Maschinenelements ausgestattet. Mindestens zwei Betätigungsarme sind mit ihrem einen Ende mit der Roboterbasis und mit ihrem anderen Ende mit dem Effektorträger verbunden. Jeder Betätigungsarm wird über einen ihm zugeordneten und an der Roboterbasis angeordneten Antrieb bewegt. Eine Bewegung der Betätigungsarme führt zu einer Bewegung des Effektorträgers. Der Effektorträger kann auch als Werkzeugträger oder als Plattform bezeichnet werden. An dem Effektorträger kann als Effektor beispielsweise ein Greifer zum Aufnehmen eines Gegenstands oder ein Werkzeug zum Bearbeiten eines Gegenstands oder ein Maschinenelement, wie beispielsweise ein Lager oder ein Getriebe angeordnet sein. Der Effektorträger ist hierzu mit einer Aufnahme für einen Effektor ausgestattet. Durch die aufeinander abgestimmte Bewegung der angetriebenen Betätigungsarme kann ein an dem Effektorträger angeordneter Effektor gezielt in mehreren Dimensionen im Raum bewegt werden. Die Betätigungsarme bewirken eine räumliche Parallelogramm-Führung des Effektorträgers. Dabei tragen alle Betätigungsarme gleichzeitig und damit parallel zur Bewegung des Effektorträgers bei. Die daraus resultierende parallele Kinematik ermöglicht eine schnelle und präzise Bewegung des Effektorträgers und des daran angeordneten Effektors. Diese Bewegung ist eine translatorische Bewegung des Effektorträgers. Ist der Industrieroboter mit drei Betätigungsarmen ausgestattet, handelt es sich um eine translatorische Bewegung in drei Raumrichtungen. Die Bewegung hat drei Freiheitsgrade und kann in einem Koordinatensystem mit x-, y- und z-Achse beschrieben werden. Ist der Industrieroboter mit zwei Betätigungsarmen ausgestattet, handelt es sich um eine translatorische Bewegung in zwei Raumrichtungen. In diesem Fall hat die Bewegung zwei Freiheitsgrade und kann in einem Koordinatensystem mit xund z-Achse beschrieben werden.

Zu derartigen Robotern zählen beispielsweise Deltaroboter. Diese sind mit mindestens zwei Betätigungsarmen ausgestattet. Bevorzugt sind drei Betätigungsarme vorgesehen, welche identisch aufgebaut und typischerweise mit einem Winkelabstand von 120° an der Roboterbasis aufgenommen sind. Die Betätigungsarme weisen einen oberen und einen unteren Armabschnitt auf, welche beweglich miteinander verbunden sind. Der obere Armabschnitt wird auch als Oberarm bezeichnet. Der untere Armabschnitt wird auch als Unterarm bezeichnet. Jeder der oberen Armabschnitte wird durch einen Armantrieb, beispielsweise eine Motor-Getriebe-Einheit, angetrieben. Die Armantriebe sind an der Roboterbasis angeordnet. Die Bewegung der oberen Armabschnitte wird über die unteren Armabschnitte auf den Effektorträger übertragen. Der untere Armabschnitt weist meist zwei parallele, in Längsrichtung des Armabschnitts verlaufende Stangen oder Streben auf. Diese sind mit einem Ende beweglich mit dem zugehörigen oberen Armabschnitt und mit dem anderen Ende beweglich mit dem Effektorträger verbunden. Die beiden Streben eines Unterarms spannen ein Parallelogramm auf. Damit die Streben eine Bewegung des Effektorträgers in drei Dimensionen im Raum ermöglichen, sind sie um mehrere geometrische Achsen beweglich an dem Oberarm und an dem Effektorträger aufgenommen. Hierzu eignen sich insbesondere sphärische Gelenke oder Kardangelenke. Da jede Strebe mit zwei derartigen Gelenken ausgestattet ist, weist jeder Unterarm insgesamt vier sphärische Gelenke oder Kardangelenke auf. Bei drei Betätigungsarmen werden insgesamt 12 derartige Gelenke für die Unterarme benötigt. Der Aufbau wird dadurch aufwändig und teuer. Hinzu kommt, dass die Bewegung des Effektorträgers in drei Dimensionen im Raum anhand der mit jeweils einem Parallelogramm aus zwei Streben aufgebauten drei Unterarme mit insgesamt 12 Gelenken mit mehreren Freiheitgraden überbestimmt ist. Zwei der Betätigungsarme sorgen für eine Bewegung in zwei Dimensionen, beispielsweise in Richtung einer x-Achse und einer y-Achse. Sie können jedoch nicht verhindern, dass sich der Effektorträger um eine z-Achse, welche orthogonal zur x-Achse und zu y-Achse steht, dreht. Der dritte Betätigungsarm sorgt zwar für eine derartige Stabilisierung des Effektorträgers und für eine Bewegung des Effektorträgers in Richtung der z-Achse. Jedoch ist er hierzu ebenfalls mit zwei Streben und insgesamt vier Gelenken an dem unteren Armabschnitt ausgestattet, obwohl eigentlich eine Strebe und zwei Gelenke ausreichend sein müssten. Die drei Betätigungsarme sind typischerweise so an der Roboterbasis angeordnet, dass die zugehörigen Unterarme mit jeweils gleichem Abstand an dem Effektorträger ansetzen, wobei jedem Betätigungsarm ein Winkelbereich von 120° zugeordnet ist. Dies führt dazu, dass der Arbeitsbereich nicht rechteckig sondern rund ist.

Neben den Deltarobotern sind auch andere Typen von parallekinematischen Robotern mit drei translatorischen Freiheitsgraden bekannt. Der Artikel "Comparison study of architectures of four 3 degree-of-freedom translational parallel manipulators" (Lung-Wen Tsai et al.) offenbart zum Beispiel einen 3-RUU parallelkinematischen Roboter. Jedoch sind die drei Betätigungsarme dieses Roboters baugleich und der Arbeitsbereich nicht quaderförmig.

Der Erfindung liegt die Aufgabe zugrunde, einen Industrieroboter mit Parallelkinematik zur Verfügung zu stellen, der mit einer geringeren Anzahl an Gelenken für die Unterarme auskommt, der einen rechteckigen Arbeitsbereich ermöglicht und bei dem eine Bewegung des Effektorträgers in drei Dimensionen im Raum nicht überbestimmt ist.

Diese Aufgabe wird durch einen Industrieroboter mit den Merkmalen des Anspruchs 1 gelöst. Der Industrieroboter weist drei Betätigungsarme auf. Davon sind zwei Betätigungsarme identisch oder ähnlich aufgebaut. Ein dritter Betätigungsarm weicht in seinem Aufbau von den beiden anderen Betätigungsarmen ab. Ein erster Betätigungsarm weist einen an der Roboterbasis angeordneten ersten Armantrieb, einen an den ersten Armantrieb gekoppelten ersten Oberarm und einen ersten Unterarm auf, wobei der erste Unterarm über mindestens ein erstes Ellbogen-Gelenk mit dem ersten Oberarm und über mindestens ein erstes Unterarm-Gelenk mit dem Effektorträger beweglich verbunden ist. Entsprechendes gilt für einen zweiten Betätigungsarm. Er weist einen zweiten Armantrieb, einen zweiten Oberarm, einen zweiten Unterarm, mindestens ein zweites Ellbogen-Gelenk und mindestens ein zweites Unterarm-Gelenk auf. Diese Komponenten sind entsprechend zu dem ersten Betätigungsarm miteinander verbunden. Das erste Ellbogen-Gelenk, das zweite Ellbogen-Gelenk, das erste Unterarm-Gelenk und das zweite Unterarm-Gelenk weisen jeweils mehrere Freiheitsgrade auf. Dies bedeutet, dass sie eine um mehrere geometrische Achsen bewegliche Verbindung ermöglichen. Ist der erste Betätigungsarm mit zwei ersten Unterarm-Gelenken ausgestattet, so sind diese räumlich versetzt zueinander an dem Effektorträger angeordnet, so dass sie sich nicht gegenseitig beeinträchtigen. Entsprechendes gilt für den zweiten Betätigungsarm, sofern dieser mit zwei zweiten Unterarm-Gelenken ausgestattet ist. Der erste Unterarm kann eine Stange oder Strebe aufweisen. Alternativ dazu kann der erste Unterarm zwei parallele Streben oder Stangen aufweisen, die ein Parallelogramm aufspannen. In diesem Fall ist der erste Betätigungsarm im wesentlichen aufgebaut wie die Betätigungsarme eines typischen Deltaroboters. Entsprechendes gilt für den zweiten Betätigungsarm: er kann nur eine Strebe oder Stange aufweisen oder zwei parallele Streben oder Stangen, die ein Parallelogramm aufspannen. Der erste Betätigungsarm und der zweite Betätigungsarm können beide identisch aufgebaut sein, wobei sowohl der erste Unterarm als auch der zweite Unterarm jeweils zwei Streben oder Stangen in Parallelogramm-Anordnung aufweisen. Alternativ dazu können der erste und der zweite Betätigungsarm ähnlich aufgebaut sein, wobei einer der beiden Betätigungsarme nur eine Strebe oder Stange am Unterarm aufweist und der andere zwei. Grundsätzlich möglich ist auch eine Ausführungsform, bei der sowohl der erste Betätigungsarm als auch der zweite Betätigungsarm jeweils genau eine Strebe oder Stange als Unterarm aufweisen.

Der dritte Betätigungsarm weist einen länglichen Armabschnitt auf, der an einem Ende unmittelbar oder mittelbar an einen dritten Armantrieb des dritten Betätigungsarms gekoppelt ist und der an seinem anderen Ende über mindestens ein drittes Unterarm-Gelenk mit dem Effektorträger verbunden ist.

Dabei weist das dritte Unterarm-Gelenk bevorzugt genau zwei Freiheitsgrade auf. Es ermöglicht damit eine Bewegung des länglichen Armabschnitts relativ zu dem Effektorträger in genau zwei Dimensionen. Der dritte Armantrieb ist an der Roboterbasis aufgenommen. Der längliche Armabschnitt des dritten Betätigungsarms ist mit einem oder mit zwei dritten Unterarm-Gelenken ausgestattet.

Die Summe der Anzahl der Unterarm-Gelenke des ersten Betätigungsarms, des zweiten Betätigungsarms und des dritten Betätigungsarms beträgt mindestens drei und höchstens fünf. Es können damit zwei Betätigungsarme mit zwei Unterarm-Gelenken und ein Betätigungsarm mit einem Unterarm-Gelenk ausgestattet sein. Alternativ sind alle drei Betätigungsarme mit nur einem Unterarm-Gelenk ausgestattet. Grundsätzlich möglich ist auch eine Ausführungsform, bei der zwei Betätigungsarme mit nur einem Unterarm-Gelenk ausgestattet sind und ein Betätigungsarm zwei oder drei Unterarm-Gelenke aufweist. Die Anzahl der Unterarm-Gelenke ist damit gegenüber bekannten Deltarobotern reduziert.

Bevorzugt ist jedem Unterarm-Gelenk eine Stange oder Strebe des zugehörigen Unterarms zugeordnet. Weist der erste Betätigungsarm beispielsweise zwei erste Unterarm-Gelenke auf, so ist dieser vorteilhafterweise mit zwei Stangen oder Streben ausgestattet, die den Unterarm bilden und ein Parallelogramm aufspannen. Jede der beiden Stangen oder Streben ist mit genau einem Unterarm-Gelenk verbunden. Dies gilt entsprechend für den zweiten Betätigungsarm und für den dritten Betätigungsarm. Die beiden Stangen oder Streben des ersten Betätigungsarms sind bevorzugt über zwei Ellbogen-Gelenke mit dem Oberarm verbunden. Auch hier gilt entsprechendes für den zweiten Betätigungsarm.

Die Unterarm-Gelenke des ersten Betätigungsarms, des zweiten Betätigungsarms und des dritten Betätigungsarms sind versetzt am Effektorträger angeordnet. Beispielsweise können die Unterarm-Gelenke des ersten und zweiten Betätigungsarms an den Seiten des Effektorträgers angeordnet sein und das mindestens eine Unterarm-Gelenk des dritten Betätigungsarms an der der Roboterbasis zugewandten Seite des Effektorträgers. Die Zentren von mindestens drei der ersten, zweiten und dritten Unterarm-Gelenke spannen eine Ebene auf, die als Effektorträger-Ebene bezeichnet wird. Der Effektorträger wird durch die drei Betätigungsarme nur translatorisch bewegt. Eine Drehung des Effektorträgers muss verhindert werden. Eine Drehung des Effektorträgers um eine zu der Effektorträger-Ebene senkrechte z-Achse wird durch den dritten Betätigungsarm verhindert.

Gemäß der Erfindung ist der erste Betätigungsarm über zwei erste Ellbogen-Gelenke mit dem ersten Oberarm und über zwei erste Unterarm-Gelenke mit dem Effektorträger verbunden. Dabei sind die zwei ersten Unterarm-Gelenke räumlich versetzt an dem Effektorträger angeordnet. In diesen Fall sorgt der erste Betätigungsarm für eine Beschleunigung des Effektorträgers in Richtung der x-Achse und verhindert zugleich eine Drehung des Effektorträgers um die x-Achse.

Bevorzugt wird eine Drehung des Effektorträgers um die z-Achse ausschließlich durch den dritten Betätigungsarm verhindert, wobei der erste Betätigungsarm und der zweite Betätigungsarm hierzu nicht beitragen. Dadurch unterscheidet sich der erfindungsgemäße Industrieroboter von bekannten Deltarobotern. Bei bekannten Deltarobotern wird eine Drehung um eine zur Effektorträger-Ebene senkrechte z-Achse durch alle Betätigungsarme gemeinsam verhindert. Dies gilt bei bekannten Deltarobotern in Bezug auf eine Drehsicherung um eine zur z-Achse senkrechte x-Achse und um eine zur z-Achse senkrechte y-Achse entsprechend. Aus diesem Grund sind die drei Betätigungsarme bekannter Deltaroboter bevorzugt mit einem Winkelabstand von 120° an der Roboterbasis angeordnet.

Der dritte Betätigungsarm erzeugt auf den Effektorträger eine beschleunigende Kraft in Richtung der z-Achse. Eine zur z-Achse senkrechte x-Achse und eine zur z-Achse senkrechte y-Achse spannen eine xy-Ebene auf, welche parallel zur Effektorträger-Ebene ist oder mit dieser zusammenfällt. In bevorzugter Weise erzeugen der erste Betätigungsarm eine beschleunigende Kraft in Richtung der x-Achse auf den Effektorträger und der zweite Betätigungsarm eine beschleunigende Kraft in Richtung der y-Achse auf den Effektorträger. Die x-Achse kann dabei senkrecht zu der y-Achse ausgerichtet sein. Dies ist aber nicht zwingend der Fall. Den drei Betätigungsarmen ist nicht wie bei bekannten Industrierobotern jeweils ein Winkelbereich von 120° zugeordnet, um den Effektorträger zu bewegen und zu stabilisieren. Vielmehr können der erste Betätigungsarm und der zweite Betätigungsarm so mit dem Effektorträger verbunden werden, dass die x-Achse, die y-Achse und die z-Achse, entlang denen der Effektorträger durch die Betätigungsarme eine beschleunigende Kraft erfährt, jeweils senkrecht aufeinander stehen. Es entsteht damit ein im wesentlichen rechteckiger oder quaderförmiger Arbeitsbereich des Industrieroboters.

Um eine Drehung des Effektorträgers zu verhindern, muss der Effektorträger nicht nur gegen eine Drehung um die z-Achse gesichert sein, sondern auch gegen eine Drehung um die zur z-Achse senkrechte x-Achse und gegen eine Drehung um die zur z-Achse senkrechte y-Achse, wobei die x-Achse und die y-Achse verschieden sein müssen aber nicht zwingend senkrecht zueinander sind. Zur Sicherung des Effektorträgers gegen eine Drehung um die x-Achse und um die y-Achse bestehen folgende Möglichkeiten:
1. Der erste Betätigungsarm sichert den Effektorträger gegen eine Drehung um die x-Achse und der zweite Betätigungsarm sichert den Effektorträger gegen eine Drehung um die y-Achse.
2. Der erste Betätigungsarm sichert den Effektorträger gegen eine Drehung um die x-Achse und der dritte Betätigungsarm sichert den Effektorträger gegen eine Drehung sowohl um die z-Achse als auch um die y-Achse.
3. Der dritte Betätigungsarm sichert den Effektorträger gegen eine Drehung um die x-Achse, um die y-Achse und um die z-Achse.

Um den Effektorträger gegen eine Drehung um die x-Achse zu sichern, kann der Effektorträger anhand von zwei versetzt am Effektorträger angeordnete Unterarm-Gelenke gehalten sein, wobei die Zentren der beiden Unterarm-Gelenke auf einer Geraden liegen, die bevorzugt senkrecht zu der x-Achse verläuft. Bei diesen zwei Unterarm-Gelenken kann es sich um zwei erste Unterarm-Gelenke handeln. In diesem Fall sichert der erste Betätigungsarm den Effektorträger gegen eine Drehung um die x-Achse. Alternativ dazu kann der dritte Betätigungsarm mit zwei dritten Unterarm-Gelenken ausgestattet sein, deren Zentren auf einer zu der x-Achse senkrechten Geraden liegen. Entsprechendes gilt für eine Sicherung des Effektorträgers gegen eine Drehung um die y-Achse. Hierzu kann der zweite Betätigungsarm mit zwei zweiten Unterarm-Gelenken ausgestattet sein, deren Zentren auf einer zur y-Achse bevorzugt senkrechten Geraden liegen. Alternativ dazu kann der dritte Betätigungsarm mit zwei dritten Unterarm-Gelenken ausgestattet sein, deren Zentren auf einer zur y-Achse bevorzugt senkrechten Geraden liegen.

Die Betätigungsarme stabilisierten den Effektorträger derart, dass er sich nicht um die z-Achse drehen kann und dass er nicht um die x-Achse und die y-Achse kippen kann. Er bleibt stets parallel zu einer vorgegebenen Ebene ausgerichtet. Diese Ebene kann insbesondere eine horizontale Ebene sein. Der dritte Betätigungsarm ist über das mindestens eine dritte Unterarm-Gelenk mit dem Effektorträger verbunden. Ist nur ein drittes Unterarm-Gelenk vorgesehen, so weist dieses genau zwei Achsen auf, um die es drehbar ist. Diese beiden Achsen werden als Unterarm-Gelenk-Achsen bezeichnet. Da das dritte Unterarm-Gelenk genau zwei Unterarm-Gelenk-Achsen und damit genau zwei Freiheitsgrade aufweist, ermöglicht es dem länglichen Armabschnitt des dritten Betätigungsarms einer Bewegung des Effektorträgers in x-Richtung und y-Richtung zu folgen, welche durch den ersten Betätigungsarm und durch den zweiten Betätigungsarm ausgelöst wird. Da das dritte Unterarm-Gelenk keine weiteren Freiheitsgrade aufweist und das dritte Unterarm-Gelenk mit Ausnahme seiner beiden Unterarm-Gelenk-Achsen drehfest mit dem länglichen Armabschnitt des dritten Betätigungsarms und mit dem Effektorträger verbunden ist, wird eine Drehung des Effektorträgers um die zu der x-Achse und zu der y-Achse orthogonale z-Achse durch den dritten Betätigungsarm verhindert. Der Effektorträger ist durch den dritten Betätigungsarm gegen eine Drehung um eine zu der Effektorträger-Ebene senkrechte z-Achse gesichert. Er sorgt damit für eine Drehsteifigkeit des Effektorträgers in Bezug auf die z-Achse. Ist der dritte Betätigungsarm mit zwei Stangen ausgestattet, von denen jede über ein drittes Unterarm-Gelenk mit dem Effektorträger verbunden ist, so weisen die beiden dritten Unterarm-Gelenke ebenfalls bevorzugt genau zwei geometrische Unterarm-Gelenkachsen auf, um die sie beweglich sind. Aufgrund dieser Eigenschaft wird eine Drehung des Effektorträgers bereits durch die dritten Unterarm-Gelenke verhindert.

Die ebene Bewegung oder Kinematik des Effektorträgers ist aufgrund der besonderen Ausgestaltung des dritten Betätigungsarms nicht überbestimmt.

Die Form des Arbeitsbereichs hat den Vorteil, dass mehrere gleichartige Industrieroboter in unmittelbarer Nähe nebeneinander angeordnet werden können, ohne dass sie sich gegenseitig beeinträchtigen und ohne dass eine Kollision der Betätigungsarme benachbart angeordneter Industrieroboter durch eine entsprechende Steuerung verhindert werden muss. Dies ermöglicht es, mehrere erfindungsgemäße Industrieroboter an einer Transportstrecke auf einer kurzen Distanz anzuordnen.

Nach einer vorteilhaften Ausgestaltung der Erfindung ist der Effektorträger ausschließlich durch den dritten Betätigungsarm gegen eine Drehung um die z-Achse gesichert. In diesem Fall tragen der erste Betätigungsarm und der zweite Betätigungsarm nicht zu einer Verdrehsicherung des Effektorträgers in Bezug auf die z-Achse bei.

Nach einer weiteren vorteilhaften Ausgestaltung der Erfindung ist das der Roboterbasis zugewandte Ende des länglichen Armabschnitts des dritten Betätigungsarms mit einem Gelenk ausgestattet, das um genau zwei geometrische Achsen beweglich ist. Dadurch wird die Drehsteifigkeit des dritten Betätigungsarms in Bezug auf die z-Achse erhöht. Das Gelenk ist bevorzugt als Kardangelenk ausgebildet. Ist der dritte Armantrieb ortsfest und unbeweglich an der Roboterbasis angeordnet und der längliche Armabschnitt beweglich an eine Antriebsachse des dritten Armantriebs gekoppelt, so ist das Gelenk als drittes Ellbogen-Gelenk ausgebildet, das den länglichen Armabschnitt mit der Antriebsachse des dritten Armantriebs direkt oder über einen zusätzlichen dritten Oberarm verbindet. Ist der dritte Armantrieb als Linearantrieb ausgebildet, so kann dieser über das Gelenk beweglich an der Roboterbasis aufgenommen sein.

In diesem Fall ist die Antriebsachse des Linearantriebs direkt mit dem länglichen Armabschnitt des dritten Betätigungsarms verbunden.

Nach einer weiteren vorteilhaften Ausgestaltung der Erfindung ist eine der beiden Unterarm-Gelenk-Achsen, um die das dritte Unterarm-Gelenk beweglich ist, senkrecht zu einer Längsachse des länglichen Armabschnitts des dritten Betätigungsarms. Die andere Unterarm-Gelenk-Achse ist parallel zu der Effektorträger-Ebene oder verläuft in dieser.

Nach einer weiteren vorteilhaften Ausgestaltung der Erfindung ist der zweite Betätigungsarm über genau ein zweites Unterarm-Gelenk mit dem Effektorträger verbunden. Der dritte Betätigungsarm ist über zwei dritte Unterarm-Gelenke mit dem Effektorträger verbunden, welche räumlich versetzt an dem Effektorträger angeordnet sind. In diesem Fall sorgt der zweite Betätigungsarm für eine beschleunigende Kraft auf den Effektorträger in Richtung der y-Achse. Der dritte Betätigungsarm verhindert sowohl eine Drehung des Effektorträgers um die z-Achse als auch eine Drehung des Effektorträgers um die y-Achse.

Nach einer weiteren vorteilhaften Ausgestaltung der Erfindung schneidet eine erste Gerade, welche die Zentren der beiden ersten Unterarm-Gelenke miteinander verbindet, eine Gerade, welche die Zentren der beiden dritten Unterarm-Gelenke miteinander verbindet, senkrecht. Diese Gerade kann als dritte Gerade bezeichnet werden, da sie die beiden dritten Unterarm-Gelenke miteinander verbindet. Die ersten Unterarm-Gelenke und die dritten Unterarm-Gelenke sind in diesem Fall über Kreuz an dem Effektorträger angeordnet.

Nach einer weiteren vorteilhaften Ausgestaltung der Erfindung sind der erste Betätigungsarm über zwei erste Unterarm-Gelenke mit dem Effektorträger verbunden und der zweite Betätigungsarm über zwei zweite Unterarm-Gelenke mit dem Effektorträger verbunden. Die ersten Unterarm-Gelenke und die zweiten Unterarm-Gelenke sind räumlich versetzt am Effektorträger angeordnet. Der dritte Betätigungsarm ist über genau ein drittes Unterarm-Gelenk mit dem Effektorträger verbunden, welches um genau zwei Unterarm-Gelenk-Achsen beweglich ist. In diesem Fall ist der Effektorträger durch den ersten Betätigungsarm gegen eine Drehung um die x-Achse gesichert, durch den zweiten Betätigungsarm gegen eine Drehung um die y-Achse und durch den dritten Betätigungsarm gegen eine Drehung um die z-Achse.

Nach einer weiteren vorteilhaften Ausgestaltung der Erfindung schneidet eine erste Gerade, welche die Zentren der beiden ersten Unterarm-Gelenke miteinander verbindet, eine zweite Gerade, welche die Zentren der beiden zweiten Unterarm-Gelenke miteinander verbindet, senkrecht. Die beiden ersten Unterarm-Gelenke und die beiden zweiten Unterarm-Gelenke sind damit über Kreuz an dem Effektorträger angeordnet. Der Schnittpunkt kann dabei am Rand des Effektorträgers liegen oder in der Mitte des Effektorträgers, beispielsweise oberhalb des Tool Center Points TCP. Liegt der Schnittpunkt am Rand des Effektorträgers, so können sich die Stangen oder Streben des ersten Unterarms und die Stangen oder Streben des zweiten Unterarms bei einer Bewegung des Effektorträgers nicht beeinträchtigen.

Nach einer weiteren vorteilhaften Ausgestaltung der Erfindung schneidet eine dritte Gerade, welche senkrecht zu der Effektorträger-Ebene ist und durch ein Zentrum des dritten Unterarm-Gelenks verläuft, die zweite Gerade, welche die Zentren der beiden zweiten Unterarm-Gelenke miteinander verbindet. Der Schnittpunkt liegt vorteilhafterweise im Zentrum des Effektorträgers, beispielsweise oberhalb des TCP.

Nach einer weiteren vorteilhaften Ausgestaltung der Erfindung schneiden sich die erste Gerade, die zweite Gerade und die dritte Gerade in einem Punkt. Dieser Punkt liegt bevorzugt im TCP oder oberhalb des TCP.

Nach einer weiteren vorteilhaften Ausgestaltung der Erfindung sind der erste Armantrieb und der zweite Armantrieb Rotationsantriebe. Dabei können eine erste Antriebsachse des ersten Armantriebs und eine zweite Antriebsachse des zweiten Armantriebs im wesentlichen senkrecht zueinander verlaufen. Diese Anordnung ist beispielsweise geeignet, wenn die ersten Unterarm-Gelenke des ersten Betätigungsarms und die zweiten Unterarm-Gelenke des zweiten Betätigungsarms über Kreuz an dem Effektorträger angeordnet sind oder wenn die der erste Betätigungsarm zwei erste Unterarm-Gelenke und der zweite Betätigungsarm ein zweites Unterarm-Gelenk aufweist. Die erste Antriebsachse ist dabei diejenige von dem ersten Armantrieb angetriebene Achse, mit der der erste Oberarm drehfest verbunden ist und über die das Drehmoment des ersten Armantriebs auf den ersten Oberarm übertragen wird. Die Antriebsachse kann auch als Antriebsflansch ausgestaltet sein. Entsprechendes gilt für die zweite Antriebsachse in Bezug auf den zweiten Oberarm. Die erste Antriebsachse und die zweite Antriebsachse drehen sich jeweils um eine geometrische Achse. Wenn die erste Antriebsachse senkrecht zu der zweiten Antriebsachse ist, stehen die beiden zugehörigen geometrischen Achsen senkrecht aufeinander.

Nach einer weiteren vorteilhaften Ausgestaltung der Erfindung ist der dritte Armantrieb ein Rotationsantrieb. An den Rotationsantrieb ist ein Oberarm des dritten Betätigungsarms gekoppelt. Dieser Oberarm wird im folgenden als dritter Oberarm bezeichnet, da es der Oberarm des dritten Betätigungsarms ist. Der dritte Oberarm ist über ein drittes Ellbogen-Gelenk beweglich mit dem länglichen Armabschnitt des dritten Betätigungsarms verbunden. Über den Oberarm wird das Drehmoment des Rotationsantriebs in eine Translationsbewegung des länglichen Armabschnitts übertragen. Die Länge des Oberarms kann in einer besonderen Relation zu der Länge des länglichen Armabschnitts stehen. Bei einem langen Oberarm genügt ein kleiner Drehwinkel des dritten Armantriebs, um einen großen z-Hub des Effektorträgers auszulösen. Mit z-Hub wird dabei eine Bewegung des Effektorträgers in Richtung der z-Achse bezeichnet. Bei einem kürzeren Oberarm ist für den gleichen z-Hub ein größerer Drehwinkel des dritten Armantriebs notwendig. Das dritte Ellbogen-Gelenk bewegt sich bei einer Drehung des dritten Oberarms auf einer Kreisbahn. Je länger der dritte Oberarm ist, umso größer ist der Radius dieser Kreisbahn. Die Länge des dritten Oberarms und die Länge des länglichen Armabschnitts des dritten Betätigungsarms werden vorteilhafterweise so gewählt, dass der dritte Oberarm und der längliche Armabschnitt im wesentlichen senkrecht zueinander ausgerichtet sind, wenn sich der Effektorträger in der Mitte eines Arbeitsbereichs befindet, der durch den Bewegungsumfang des ersten Betätigungsarms, des zweiten Betätigungsarms und des dritten Betätigungsarms vorgegeben ist. Diese Position des Effektorträgers kann als Ausgangsposition bezeichnet werden. Ausgehend von dieser Ausgangsposition kann der dritte Oberarm durch den dritten Armantrieb um ca. 45° in die eine oder andere Richtung gedreht werden. Eine Drehung in diesem Winkelbereich ist für das dritte Ellbogen-Gelenk unproblematisch. Insbesondere Kardangelenke können einen derartigen Winkelbereich abdecken.

Nach einer weiteren vorteilhaften Ausgestaltung der Erfindung weist das dritte Ellbogen-Gelenk genau zwei Achsen und damit zwei Freiheitsgrade auf. Dadurch wird die Drehsteifigkeit des dritten Betätigungsarms in Bezug auf die z-Achse erhöht.

Nach einer weiteren vorteilhaften Ausgestaltung der Erfindung spannen die erste Antriebsachse und die zweite Antriebsachse eine Antriebsebene auf. Eine dritte Antriebsachse des dritten Armantriebs verläuft in dieser Antriebsebene.

Nach einer weiteren vorteilhaften Ausgestaltung der Erfindung verläuft die dritte Antriebsachse senkrecht zu der ersten Antriebsachse oder senkrecht zu der zweiten Antriebsachse.

Nach einer weiteren vorteilhaften Ausgestaltung der Erfindung sind der erste Armantrieb und der zweite Armantrieb als Linearantriebe ausgebildet.

Nach einer weiteren vorteilhaften Ausgestaltung der Erfindung ist der dritte Armantrieb ein Linearantrieb, dessen Antriebsache über ein um mehrere Achsen bewegliches Gelenk mit dem länglichen Armabschnitt des dritten Betätigungsarms verbunden ist. Eine Antriebsachse des Linearantriebs bewegt sich linear entlang einer geometrischen Bewegungsachse. Diese Linearbewegung der Antriebsachse wird auf den länglichen Armabschnitt des dritten Betätigungsarms und von dort auf den Effektorträger übertragen. Der Linearantrieb kann dabei ortsfest an der Roboterbasis angeordnet sein. In diesem Fall ist die Antriebsachse mit dem dritten Ellbogen-Gelenk des dritten Betätigungsarms verbunden. Antriebsachse und drittes Ellbogen-Gelenk bewegen sich relativ zu der Roboterbasis. Der Linearantrieb bewegt sich nicht relativ zu der Roboterbasis. Alternativ dazu kann der Linearantrieb über ein drittes Gelenk, welches bevorzugt als Kardangelenk ausgebildet ist, beweglich an der Roboterbasis aufgenommen sein. In diesem Fall bewegt sich der Linearantrieb relativ zu der Roboterbasis. Die Antriebsachse des Linearantriebs ist direkt mit dem länglichen Armabschnitt des dritten Betätigungsarms verbunden.

Nach einer weiteren vorteilhaften Ausgestaltung der Erfindung ist die Antriebsachse des Linearantriebs gegen eine Drehung um eine Achse gesichert, welche entlang des Verstellwegs des Linearantriebs verläuft. Dadurch wird die Drehsteifigkeit des dritten Betätigungsarms in Bezug auf die z-Achse erhöht.

Nach einer weiteren vorteilhaften Ausgestaltung der Erfindung ist das dritte Unterarm-Gelenk oberhalb der Effektorträger-Ebene angeordnet.

Nach einer weiteren vorteilhaften Ausgestaltung der Erfindung befindet sich ein Zentrum des dritten Unterarm-Gelenks in der Effektorträger-Ebene.

Nach einer weiteren vorteilhaften Ausgestaltung der Erfindung sind die ersten Unterarm-Gelenke und die zweiten Unterarm-Gelenke seitlich an dem Effektorträger angeordnet. Das dritte Unterarm-Gelenk ist an der der Roboterbasis zugewandten Seite des Effektorträgers angeordnet.

Nach einer weiteren vorteilhaften Ausgestaltung der Erfindung ist das dritte Unterarm-Gelenk ein Kardangelenk. Dieses zeichnet sich dadurch aus, dass es genau zwei Achsen aufweist, die bevorzugt zueinander senkrecht stehen. Das Zentrum des Kardangelenks entspricht dem Schnittpunkt der beiden Achsen. Kardangelenke werden auch als Kreuzgelenke bezeichnet.

Nach einer weiteren vorteilhaften Ausgestaltung der Erfindung ist der längliche Armabschnitt des dritten Betätigungsarms an seinem dem Effektorträger abgewandten Ende mit einem Kardangelenk ausgestattet. Dieses Kardangelenk bildet das dritte Ellbogen-Gelenk des dritten Betätigungsarms.

Nach einer weiteren vorteilhaften Ausgestaltung der Erfindung ist der längliche Armabschnitt des dritten Betätigungsarms als länglicher Hohlkörper ausgebildet.

Nach einer weiteren vorteilhaften Ausgestaltung der Erfindung sind in dem länglichen Armabschnitt Versorgungsleitungen eines an dem Effektorträger angeordneten Effektors aufgenommen. Die an dem länglichen Armabschnitt angeordneten Gelenke mit mehreren Freiheitsgraden können ebenfalls einen Hohlraum aufweisen, so dass ein durchgängiger Kanal für die Versorgungsleitungen bis zum Effektorträger gebildet ist.

Nach einer weiteren vorteilhaften Ausgestaltung der Erfindung weist der Industrieroboter eine Effektorantriebsachse auf, welche einen an dem Effektorträger angeordneten Effektor bewegt. Diese Achse wird auch als vierte Achse bezeichnet. Die Effektorantriebsachse umfasst einen Effektorantrieb, welcher an dem dritten Betätigungsarm angeordnet ist. Er kann beispielsweise an dem länglichen Armabschnitt oder an einem dritten Oberarm des dritten Betätigungsarms angeordnet sein.

Nach einer weiteren vorteilhaften Ausgestaltung der Erfindung verläuft die Effektorantriebsachse zumindest abschnittsweise in dem länglichen Armabschnitt des dritten Betätigungsarms.

Nach einer weiteren vorteilhaften Ausgestaltung der Erfindung ist der Armantrieb des dritten Betätigungsarms außen an der Roboterbasis angeordnet. Ferner zeigt das mindestens eine Ellenbogen-Gelenk des dritten Roboterarms zum Zentrum des Industrieroboters und/ oder zum Zentrum des Arbeitsbereichs. Dies ermöglicht es, dass der längliche Armabschnitt des dritten Betätigungsarms in Bezug zur x-/y- Ebene nur begrenzt gekippt werden muss, und damit eine maximale Verdrehsteifigkeit um die z- Achse und gegebenenfalls auch um die y-Achse auf den Effektorträger übertragen kann. Ferner ermöglicht diese Anordnung, dass im Zentrum der Roboterbasis genügend Platz für koaxiale Getriebemotoren entsteht, was wiederum die senkrechte Anordnung der Antriebsachsen zueinander möglich macht. Im Vergleich dazu besteht bei bekannten Deltarobotern die Notwendigkeit, entweder die Armantriebe mit teuren Winkelgetrieben auszustatten oder zumindest einen der Antriebe in der Höhe versetzt an der Roboterbasis anordnen zu müssen.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind Ausführungsbeispiele des Erfindungsgegenstandes dargestellt. Es zeigen:
- Figur 1: erstes Ausführungsbeispiel eines Industrieroboters in perspektivischer Ansicht,
- Figur 2: Industrieroboter gemäß Figur 1 in einer weiteren perspektivischen Ansicht,
- Figur 3: Effektorträger des Industrieroboters gemäß Figur 1 in perspektivischer Ansicht,
- Figur 4: Industrieroboter gemäß Figur 1 in einer Seitenansicht,
- Figur 5: Industrieroboter gemäß Figur 1 in einer weiteren Seitenansicht,
- Figur 6: Industrieroboter gemäß Figur 1 in einer weiteren Seitenansicht,
- Figur 7: zweites Ausführungsbeispiel eines Industrieroboters in perspektivischer Ansicht,
- Figur 8: Industrieroboter gemäß Figur 7 in einer weiteren perspektivischen Ansicht,
- Figur 9: Industrieroboter gemäß Figur 7 in einer Seitenansicht,
- Figur 10: drittes Ausführungsbeispiel eines Industrieroboters in perspektivischer Ansicht,
- Figur 11: Industrieroboter gemäß Figur 10 in einer Seitenansicht,
- Figur 12: Effektorträger des Industrieroboters gemäß Figur 10 in perspektivischer Ansicht,
- Figur 13: viertes Ausführungsbeispiel eines Industrieroboters in perspektivischer Ansicht,
- Figur 14: fünftes Ausführungsbeispiel eines Industrieroboters in perspektivischer Ansicht,
- Figur 15: Industrieroboter gemäß Figur 14 in einer Seitenansicht,
- Figur 16: sechstes Ausführungsbeispiel eines Industrieroboters in perspektivischer Ansicht,
- Figur 17: Industrieroboter gemäß Figur 16 in einer weiteren perspektivischen Ansicht,
- Figur 18: Industrieroboter gemäß Figur 16 in einer Seitenansicht,
- Figur 19: Seitenansicht einer Anordnung mehrerer Industrieroboter gemäß Figur 7 in einer Reihe.

### Beschreibung der Ausführungsbeispiele

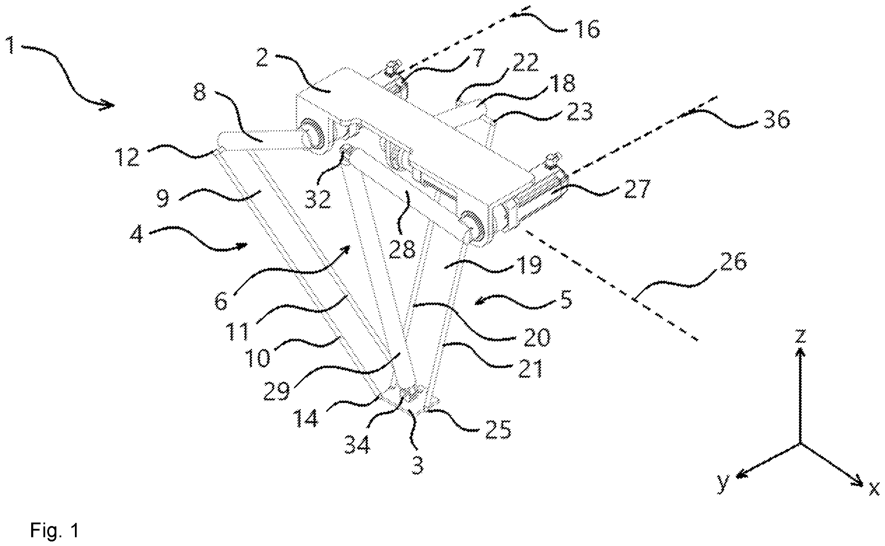

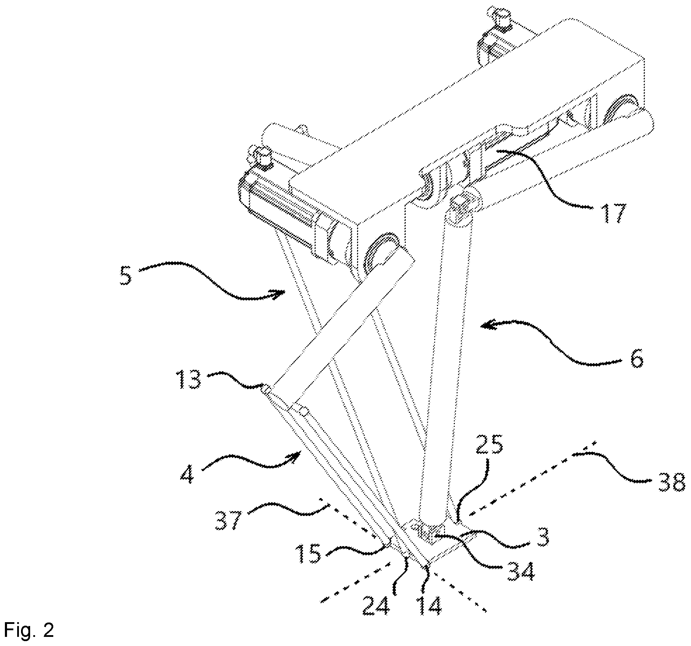

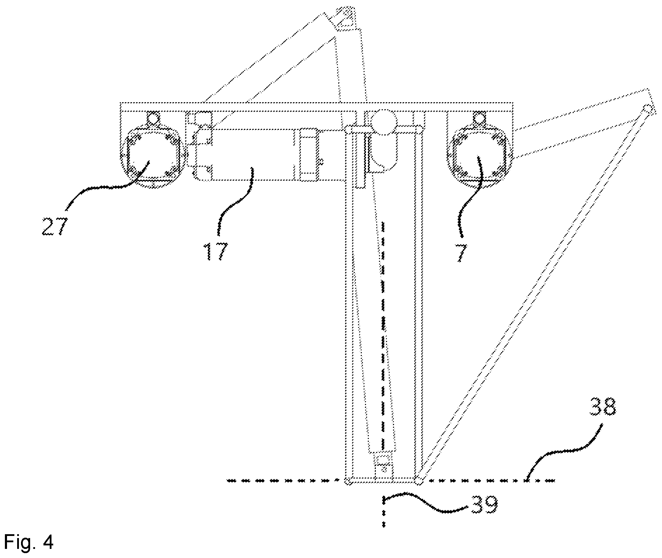

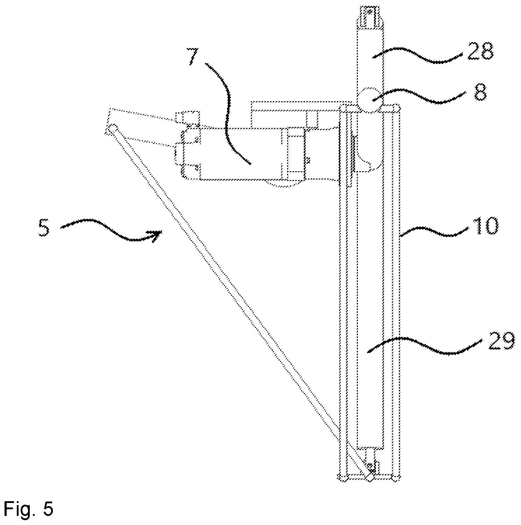

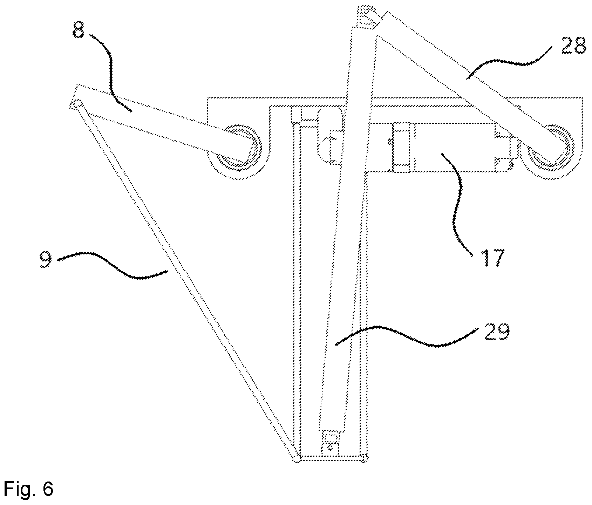

In den Figuren 1 bis 6 ist ein erstes Ausführungsbeispiel eines Industrieroboters 1 mit Parallelkinematik dargestellt. Der Industrieroboter 1 weist eine Roboterbasis 2, einen Effektorträger 3, einen ersten Betätigungsarm 4, einen zweiten Betätigungsarm 5 und einen dritten Betätigungsarm 6 auf. Der erste Betätigungsarm 4 umfasst einen ersten Armantrieb 7, einen mit einer Antriebsachse des ersten Armantriebs 7 verbundenen ersten Oberarm 8 und einen ersten Unterarm 9.

Der erste Unterarm 9 weist zwei parallele Stangen 10, 11 auf. Jede der beiden Stangen 10, 11 ist an ihrem dem ersten Oberarm 8 zugewandten Ende über ein erstes Ellbogen-Gelenk 12, 13 mit dem ersten Oberarm 8 beweglich verbunden. Ferner ist jede der beiden Stangen 10, 11 an ihrem dem Effektorträger 3 zugewandten Ende über ein erstes Unterarm-Gelenk 14, 15 mit dem Effektorträger 3 verbunden. Die ersten Ellbogen-Gelenke 12, 13 und die ersten Unterarm-Gelenke 14, 15 sind als sphärische Gelenke ausgebildet. Sie haben mehrere Freiheitsgrade. Wenn der erste Armantrieb 7 eine Drehbewegung auf den ersten Oberarm 8 überträgt, wird diese Drehbewegung über die beiden Stangen 10, 11 des ersten Unterarms 9 auf den Effektorträger 3 übertragen.

Der zweite Betätigungsarm 5 ist identisch aufgebaut wie der erste Betätigungsarm 4. Er weist einen zweiten Armantrieb 17, einen zweiten Oberarm 18, einen zweiten Unterarm 19 mit zwei Stangen 20, 21, zwei zweite Ellbogen-Gelenke 22, 23 und zwei zweite Unterarm-Gelenke 24, 25 auf. Eine Drehbewegung des zweiten Armantriebs 17 wird über den zweiten Oberarm 18 und den zweiten Unterarm 19 auf den Effektorträger 3 übertragen.

Der erste Armantrieb 7 und der zweite Armantrieb 17 sind Rotationsantriebe. Eine erste Antriebsachse des ersten Armantriebs 7 wird um eine erste geometrische Achse 16 zur Rotation angetrieben. Eine zweite Antriebsachse des zweiten Armantriebs 17 wird um eine zweite geometrische Achse 26 zur Rotation antrieben. Dabei sind der erste Armantrieb 7 und der zweite Armantrieb 17 derart an der Roboterbasis angeordnet, dass sich die erste geometrische Achse 16 und die zweite geometrische Achse 26 senkrecht schneiden. Der erste Betätigungsarm 4 und der zweite Betätigungsarm 5 sorgen damit für eine translatorische Bewegung des Effektorträgers 3 in zwei Dimensionen, nämlich in Richtung einer x-Achse und in Richtung einer dazu orthogonalen y-Achse. Eine durch die x-Achse und die y-Achse aufgespannte xy-Ebene ist dabei parallel zu dem Effektorträger 3. Bei einer Bewegung des Effektorträgers 3 durch den ersten, zweiten und dritten Betätigungsarm 4, 5, 6 ändert der Effektorträger 3 seine Ausrichtung relativ zu der xy-Ebene nicht. Er bleibt stets parallel zu dieser.

Der dritte Betätigungsarm 6 weicht in seinem Aufbau von dem ersten und dem zweiten Betätigungsarm 4, 5 ab. Der dritte Betätigungsarm 6 weist einen dritten Armantrieb 27 auf, der an der Roboterbasis 2 angeordnet ist. Es handelt sich hierbei ebenfalls um einen Rotationsantrieb. An eine Antriebsachse des dritten Armantriebs 27 ist ein dritter Oberarm 28 drehfest gekoppelt, so dass eine Drehbewegung des dritten Armantriebs 27 auf den dritten Oberarm 28 übertragen wird. Der dritte Oberarm 28 ist über ein drittes Ellbogen-Gelenk 32 mit einem länglichen Armabschnitt 29 verbunden, der einen Unterarm des dritten Betätigungsarms 6 bildet. Der längliche Armabschnitt 29 ist über ein drittes Unterarm-Gelenk 34 mit dem Effektorträger 3 verbunden. Das dritte Ellbogen-Gelenk 32 und das dritte Unterarm-Gelenk 34 sind als Kardangelenk ausgebildet. Dieses weist genau zwei Freiheitsgrade auf. Dabei ist das Kardangelenk derart mit dem Effektorträger 3 verbunden, dass sich der längliche Armabschnitt 29 in zwei Dimensionen, nämlich in x- und y-Richtung relativ zu dem Effektorträger verkippen kann. Dadurch kann der Effektorträger 3 und der an den Effektorträger 3 gekoppelte längliche Armabschnitt 29 einer Bewegung folgen, die durch den ersten Betätigungsarm 4 und den zweiten Betätigungsarm 5 ausgelöst wird. Eine Drehung des Effektorträgers 3 um eine zu der x-Achse und der y-Achse orthogonale z-Achse ist jedoch dank des als Kardangelenk ausgebildeten dritten Unterarm-Gelenks 34 ausgeschlossen. Die z-Achse steht senkrecht auf der xy-Ebene und verläuft damit senkrecht zu dem Effektorträger 3.

Der dritte Armantrieb 27 ist ebenfalls ein Rotationsantrieb. Eine Antriebsachse des dritten Armantriebs 27, welche im folgenden als dritte Antriebsachse bezeichnet wird, wird um eine dritte geometrische Achse 36 zur Rotation angetrieben. Die erste geometrische Achse 16 des ersten Armantriebs 7, die zweite geometrische Achse 26 des zweiten Armantriebs 17 und die dritte geometrische Achse 36 des dritten Armantriebs 27 verlaufen alle in einer gemeinsamen Ebene. Dabei sind die erste geometrische Achse 16 und die dritte geometrische Achse 36 parallel zueinander. Die zweite geometrische Achse 26 verläuft senkrecht zu der ersten geometrischen Achse 16 und zu der dritten geometrischen Achse 36.

Eine Bewegung des dritten Armantriebs 27 führt dazu, dass der dritte Oberarm 28 um die dritte geometrische Achse 36 gedreht wird. Diese Bewegung wird über das dritte Ellbogen-Gelenk 32, den länglichen Armabschnitt 29 und das dritte Unterarm-Gelenk 34 auf den Effektorträger 3 übertragen. Sie führt zu einer translatorischen Bewegung des Effektorträgers 3 in Richtung der z-Achse.

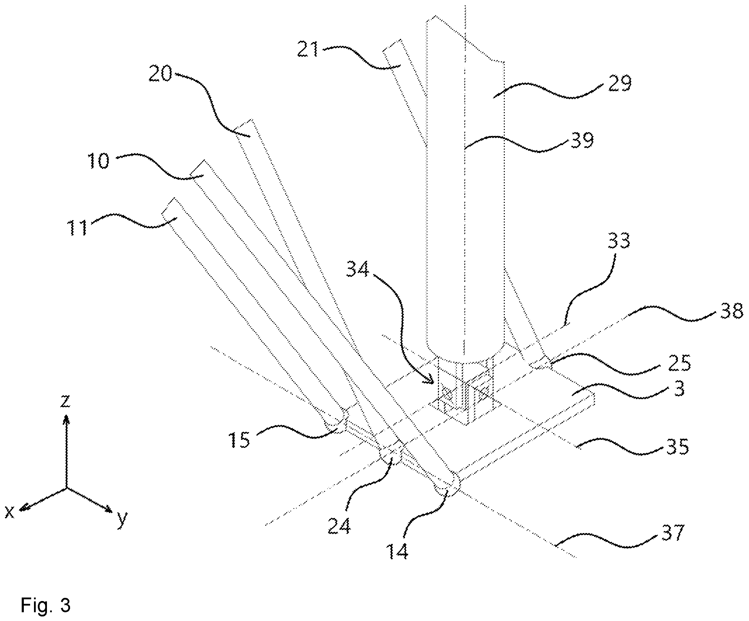

Figur 3 zeigt den Effektorträger mit den ersten Unterarm-Gelenken 14, 15, den zweiten Unterarm-Gelenken 24, 25 und dem dritten Unterarm-Gelenk 34. Die beiden ersten Unterarm-Gelenke 14, 15 des ersten Betätigungsarms 4 sind mit dem Effektorträger 3 im seitlichen Randbereich verbunden. Sie sitzen dabei an zwei Ecken des rechteckigen Effektorträgers 3. Eine erste Gerade 37 verläuft durch das Zentrum des ersten Unterarm-Gelenks 14 und durch das Zentrum des ersten Unterarm-Gelenks 15. Diese erste Gerade 37 ist parallel zu einer Seite des rechteckigen Effektorträgers 3. Sie ist parallel zur y-Achse und senkrecht zur x-Achse. Die beiden zweiten Unterarm-Gelenke 24, 25 des zweiten Betätigungsarms 5 sind ebenfalls am seitlichen Rand mit dem Effektorträger 3 verbunden. Im Unterschied zu den ersten Unterarm-Gelenken 14, 15 sitzen die zweiten Unterarm-Gelenke 24, 25 jedoch nicht an zwei Ecken des Effektorträgers 3, sondern an den Seitenmitten. Eine zweite Gerade 38 verläuft durch das Zentrum des zweiten Unterarm-Gelenks 24 und durch das Zentrum des zweiten Unterarm-Gelenks 25. Die zweite Gerade 38 ist parallel zu einer Seite des rechteckigen Effektorträgers 3. Sie ist parallel zur x-Achse und senkrecht zur y-Achse. Die erste Gerade 37 schneidet die zweite Gerade 38 senkrecht. Der Schnittpunkt der beiden Geraden 37, 38 liegt in dem zweiten Unterarm-Gelenk 24. Die erste und die zweite Gerade 37, 38 spannen eine Ebene auf, die zu der xy-Ebene und zu dem Effektorträger 3 parallel ist. Sie wird als Effektorträger-Ebene bezeichnet. Das dritte Unterarm-Gelenk 34 ist ein Kardangelenk mit zwei sich kreuzenden Achsen, die als Unterarm-Gelenk-Achsen bezeichnet sind. Sie sind in Figur 3 erkennbar. Eine erste dieser beiden Unterarm-Gelenk-Achsen ist um eine geometrische Achse 33 drehbar, welche senkrecht zu einer Längsachse des länglichen Armabschnitts 29 des dritten Betätigungsarms ist. Eine zweite dieser beiden Unterarm-Gelenk-Achsen ist um eine geometrische Achse 35 drehbar, die parallel zu der Effektorträger-Ebene ist. Das Zentrum des dritten Unterarm-Gelenks entspricht dem Schnittpunkt der beiden geometrischen Achsen 33 und 35. Eine dritte Gerade 39, welche senkrecht zu der Effektorträger-Ebene ist und durch das Zentrum des dritten Unterarm-Gelenks 34 verläuft, schneidet die zweite Gerade 38 senkrecht. Die dritte Gerade ist parallel zur z-Achse. Die zweite Gerade 38 und die dritte Gerade 39 schneiden sich im Zentrum des Effektorträgers 3. Dieses Zentrum liegt oberhalb des TCP. Die erste Gerade 37 verläuft nicht durch dieses Zentrum, weil die ersten Unterarm-Gelenke 14, 15 nicht in der Mitte der Seiten des Effektorträgers 3 angeordnet sind, sondern an den Ecken. Diese Anordnung sorgt dafür, dass die beiden Stangen 10, 11 des ersten Betätigungsarms 4 nicht mit den beiden Stangen 20, 21 des zweiten Betätigungsarms 5 kollidieren, wenn der Effektorträger 3 bewegt wird.

Die erste Gerade 37 ist parallel zu der ersten geometrischen Achse 16 des ersten Armantriebs 7. Die zweite Gerade 38 ist parallel zu der zweiten geometrischen Achse 26 des zweiten Armantriebs 17. Die dritte Gerade 39 ist senkrecht zu der dritten geometrischen Achse 36 des dritten Armantriebs.

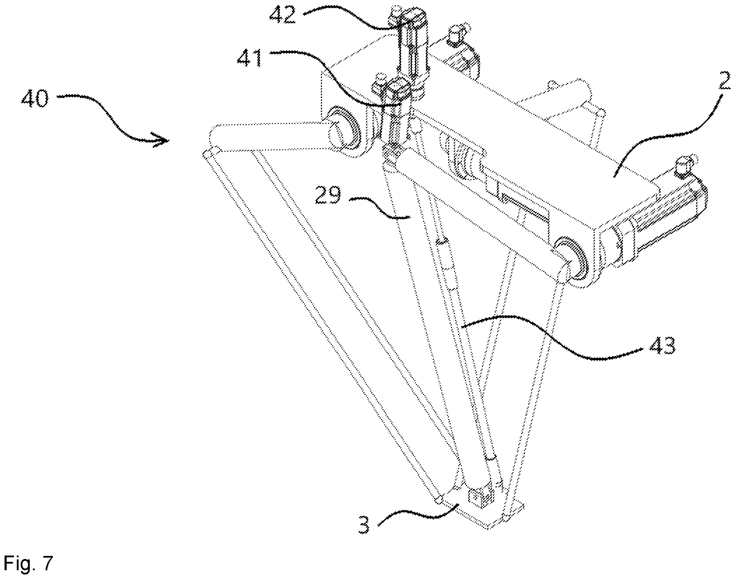

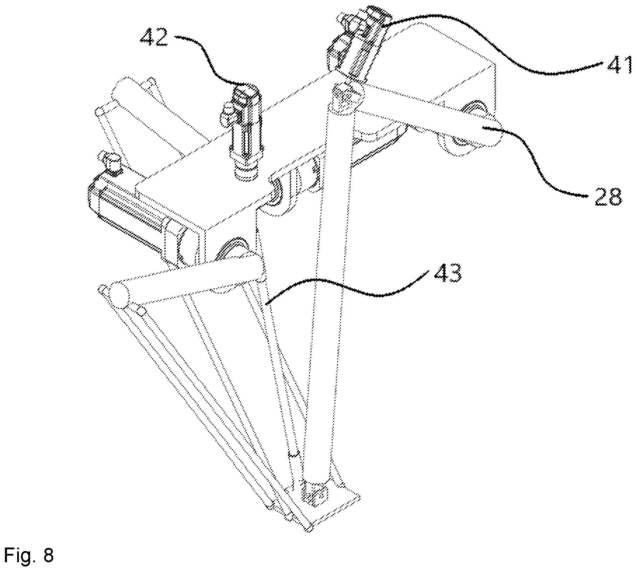

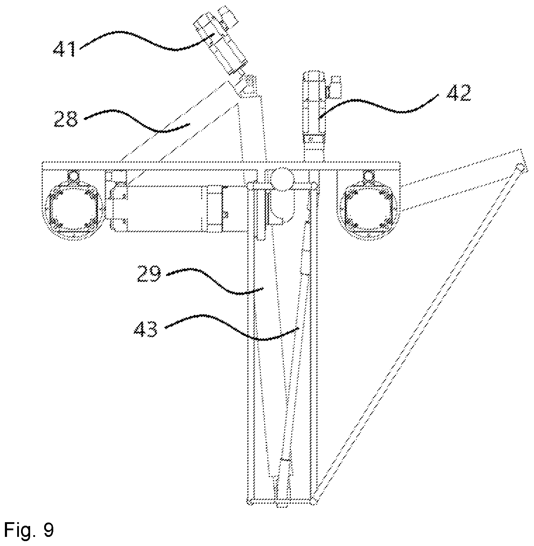

In den Figuren 7 bis 9 ist ein zweites Ausführungsbeispiel eines Industrieroboters 40 dargestellt. Der Industrieroboter 40 stimmt im wesentlichen mit dem Industrieroboter 1 des ersten Ausführungsbeispiels gemäß Figuren 1 bis 6 überein, weshalb die gleichen Bezugszahlen für übereinstimmende Teile verwendet sind. Der Industrieroboter 40 weist zusätzlich zwei Effektorantriebsachsen für einen an dem Effektorträger 3 angeordneten, in der Zeichnung nicht dargestellten Effektor auf. Hierzu ist an dem dritten Oberarm 28 des dritten Betätigungsarms 6 ein erster Effektorantrieb 41 angeordnet. Er ist Teil einer ersten Effektorantriebsachse. Das Drehmoment des ersten Effektorantriebs 41 wird über eine Welle bis zum Effektorträger 3 übertragen, die in dem länglichen Armabschnitt 29 des dritten Betätigungsarms 6 verläuft. Sie ist daher in der Zeichnung nicht erkennbar. Eine zweite Effektorantriebsachse umfasst einen zweiten Effektorantrieb 42, der an der Roboterbasis 2 angeordnet ist. Das Drehmoment des zweiten Effektorantriebs 42 wird über eine Welle 43 bis zum Effektorträger 3 übertragen, die nicht in dem länglichen Armabschnitt 29 des dritten Betätigungsarms 6 angeordnet ist. Sie verläuft frei von der Roboterbasis 2 bis zum Effektorträger 3. Sie ist als Teleskopwelle ausgebildet, damit sie der Bewegung des Effektorträgers 3 folgen kann.

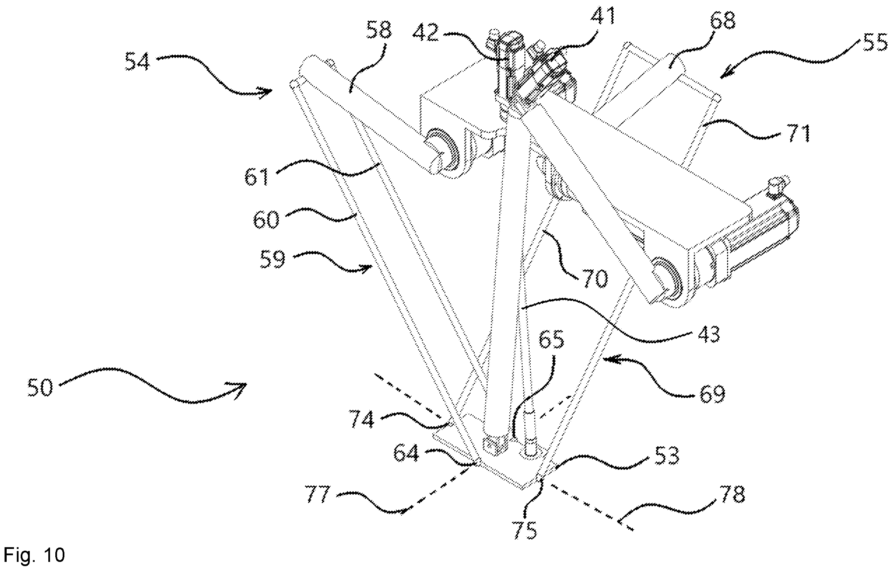

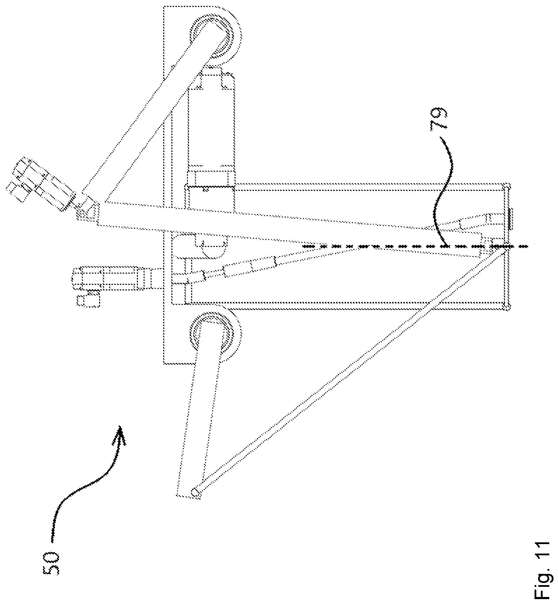

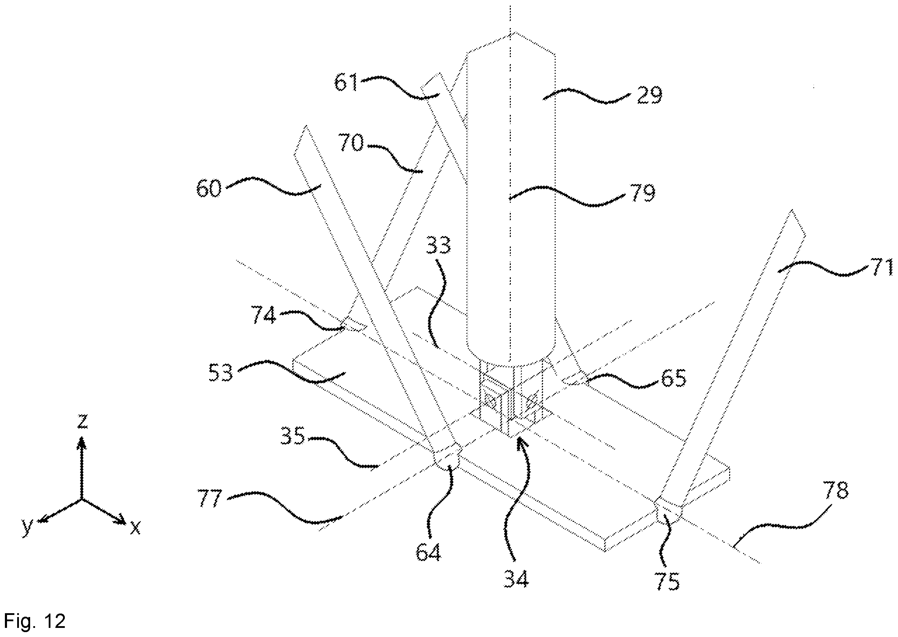

In den Figuren 10 bis 12 ist ein drittes Ausführungsbeispiel eines Industrieroboters 50 dargestellt. Er gleicht im wesentlichen dem Industrieroboter 40 gemäß Figuren 7 bis 9 und weist ebenfalls einen ersten und einen zweiten Effektorantrieb 41, 42 auf. Übereinstimmende Teile weisen daher die gleichen Bezugszahlen auf. Der dritte Betätigungsarm 6 stimmt mit dem dritten Betätigungsarm des Industrieroboters 1 gemäß Figuren 1 bis 6 überein. Der Unterschied zu dem Industrieroboter 1 und dem Industrieroboter 40 besteht darin, dass die ersten Unterarm-Gelenke 64, 65 des ersten Betätigungsarms 54 nicht an den Ecken des Effektorträgers 53 angeordnet sind sondern in der Mitte der Seiten des Effektorträgers 53 genau wie die zweiten Unterarm-Gelenke 74, 75 des zweiten Betätigungsarms 55. Figur 12 zeigt den Effektorträger 53 des Industrieroboters 50 mit den ersten Unterarm-Gelenken 64, 65, den zweiten Unterarm-Gelenken 74, 75 und dem dritten Unterarm-Gelenk 34. Zur besseren Übersichtlichkeit ist in Figur 12 die Welle 43 des zweiten Effektorantriebs 42 nicht dargestellt. Die Unterarm-Gelenke 64, 65, 74, 75 sind über Kreuz an dem Effektorträger 53 angeordnet. Dies führt dazu, dass sich eine erste Gerade 77, welche durch die Zentren der beiden ersten Unterarm-Gelenke 64, 65 verläuft, und eine zweite Gerade 78, welche durch die Zentren der beiden zweiten Unterarm-Gelenke 74, 75 verläuft, in der Mitte des Effektorträgers 53 schneiden. Der Schnittpunkt befindet sich unmittelbar in oder an dem dritten Unterarm-Gelenk 34. Die erste Gerade 77 und die zweite Gerade 78 spannen eine Ebene auf, die als Effektorträger-Ebene bezeichnet ist. Die erste Gerade 77 ist senkrecht zur x-Achse und parallel zu y-Achse. Die zweite Gerade 78 ist parallel zur x-Achse und senkrecht zur y-Achse. Das dritte Unterarm-Gelenk 34 weist in Übereinstimmung zu Figur 3 zwei sich kreuzende Unterarm-Gelenk-Achsen auf, die um zwei geometrische Achsen 33, 35 drehbar sind. Das Zentrum des dritten Unterarm-Gelenks 34 entspricht dem Schnittpunkt der geometrischen Achsen 33 und 35. Eine dritte Gerade 79 ist senkrecht zu der Effektorträger-Ebene der ersten Gerade 77 und der zweiten Gerade 78 und verläuft durch das Zentrum des dritten Unterarm-Gelenks 34. Die dritte Gerade 79 schneidet die erste Gerade 77 und die zweite Gerade 78. Alle drei Geraden 77, 78, 79 schneiden sich in einem Punkt. Dieser Punkt befindet sich oberhalb des TCP. Um zu verhindern, dass die Stangen 60, 61 des ersten Betätigungsarms 54 mit den Stangen 70, 71 des zweiten Betätigungsarms 55 kollidieren, sind die Stangen 70, 71 des zweiten Betätigungsarms 55 mit größerem Abstand an dem zweiten Oberarm 68 angeordnet als die Stangen 60, 61 des ersten Betätigungsarms 54 an dem ersten Oberarm 58.

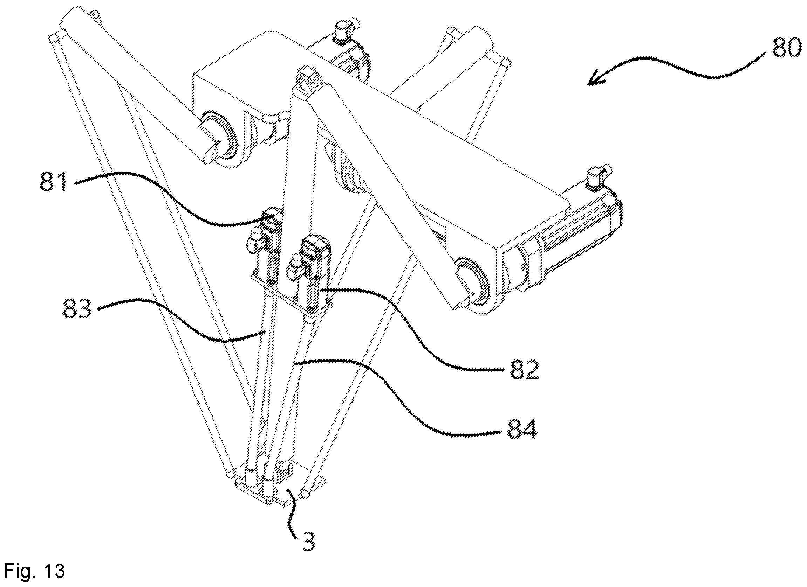

Figur 13 zeigt ein viertes Ausführungsbeispiel eines Industrieroboters 80, welcher im wesentlichen dem Industrieroboter 1 gemäß Figuren 1 bis 5 entspricht. Für übereinstimmende Teile wurden dieselben Bezugszahlen verwendet. Der Industrieroboter 80 unterscheidet sich von dem Industrieroboter 1 dadurch, dass zwei Effektorantriebe 81, 82 an dem länglichen Armabschnitt 29 des dritten Betätigungsarms 6 angeordnet sind. Die beiden Effektorantriebe 81, 82 sind dabei seitlich an dem länglichen Armabschnitt 29 befestigt. Über zwei Wellen 83, 84 ist das Drehmoment der Effektorantriebe 81, 82 bis zu dem Effektorträger 3 geführt. Ein an dem Effektorträger 3 angeordneter Effektor kann dort mit den beiden Wellen 83, 84 verbunden werden. Der Effektor ist nicht in der Zeichnung dargestellt.

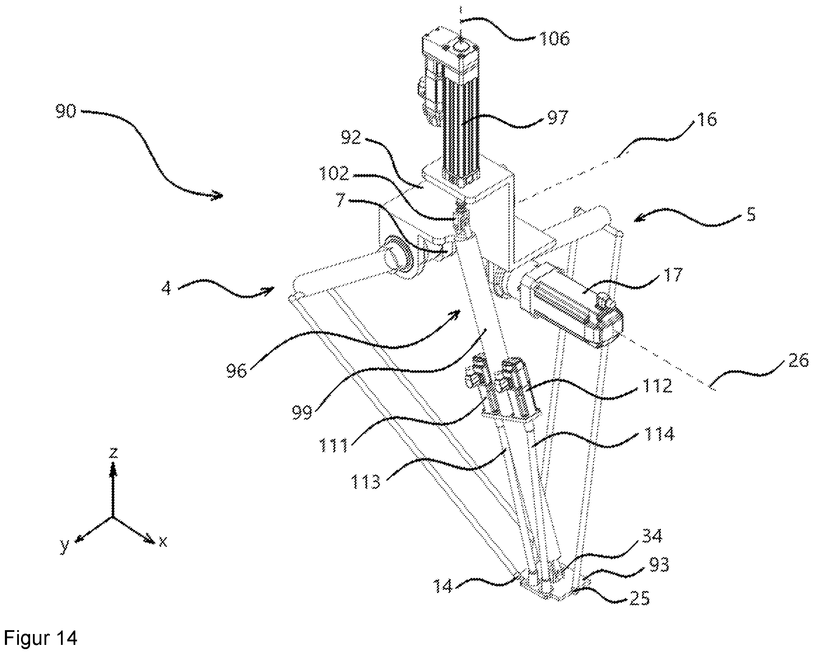

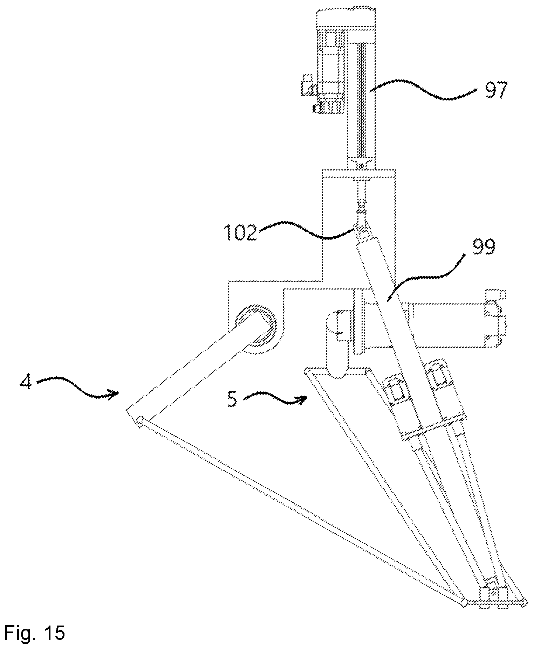

In den Figuren 14 und 15 ist ein fünftes Ausführungsbeispiel eines Industrieroboters 90 dargestellt. Der erste Betätigungsarm 4 und der zweite Betätigungsarm 5 des Industrieroboters 90 sowie die Anordnung der ersten Unterarm-Gelenke, der zweiten Unterarm-Gelenke und des dritten Unterarm-Gelenks 34 stimmen mit dem Industrieroboter 1 gemäß Figuren 1 bis 6 überein. In Figur 14 ist lediglich das erste Unterarm-Gelenk und das zweite Unterarm-Gelenk 25 erkennbar. Für die übereinstimmenden Teile wurden die gleichen Bezugszahlen verwendet. Der Industrieroboter 90 unterscheidet sich von dem Industrieroboter 1 hinsichtlich des dritten Betätigungsarms 96. Der dritte Armantrieb 97 des dritten Betätigungsarms 96 ist ein Linearantrieb. Der dritte Armantrieb 97 ist an der Roboterbasis 92 angeordnet. Eine Antriebsachse des Linearantriebs wird entlang der geometrischen Bewegungsachse 106 bewegt. Die lineare Bewegung der Antriebsachse wird über ein drittes Ellbogen-Gelenk 102 auf den länglichen Armabschnitt 99 des dritten Betätigungsarms 96 und von dort auf den Effektorträger 93 übertragen. Dies führt zu einer linearen Bewegung des Effektorträgers 93 in Richtung der z-Achse. Das dritte Ellbogen-Gelenk 102 ist als Kardangelenk ausgebildet. In Übereinstimmung mit den Industrierobotern 1, 40, 50 und 80 ist der dritte Betätigungsarm 96 über ein als Kardangelenk ausgebildetes drittes Unterarm-Gelenk 34 mit dem Effektorträger 93 verbunden. Der gesamte dritte Betätigungsarm 96 ist gegen eine Drehung um die z-Achse gesichert. Dies gilt für den als Linearantrieb ausgebildeten dritten Armantrieb 97, das dritte Ellbogen-Gelenk 102, den länglichen Armabschnitt 99, das dritte Unterarm-Gelenk 34 und Befestigung des dritten Unterarm-Gelenks 34 am Effektorträger 93. Eine Drehung des Effektorträgers 93 um die z-Achse ist damit ausgeschlossen. Die geometrische Bewegungsachse 106 steht senkrecht auf der Ebene, welche durch die erste geometrische Achse 16 des ersten Armantriebs 7 des ersten Betätigungsarms 4 und durch die zweite geometrische Achse 26 des zweiten Armantriebs 17 des zweiten Betätigungsarms 5 aufgespannt ist. Der erste Armantrieb 7 und der zweite Armantrieb 17 sind in Übereinstimmung mit den Industrierobotern 1, 40, 50 und 80 als Rotationsantriebe ausgebildet. Wie der Industrieroboter 80 in Figur 13 weist der Industrieroboter 90 zwei Effektorantriebsachsen auf. Hierzu sind zwei Effektorantriebe 111, 112 an dem länglichen Armabschnitt 99 des dritten Betätigungsarms 96 angeordnet sind. Die beiden Effektorantriebe 111, 112 sind dabei seitlich an dem länglichen Armabschnitt 99 befestigt. Über zwei Wellen 113, 114 ist das Drehmoment der Effektorantriebe 111, 112 bis zu dem Effektorträger 93 geführt. Ein an dem Effektorträger 93 angeordneter Effektor kann dort mit den beiden Wellen 113, 114 verbunden werden. Der Effektor ist nicht in der Zeichnung dargestellt.

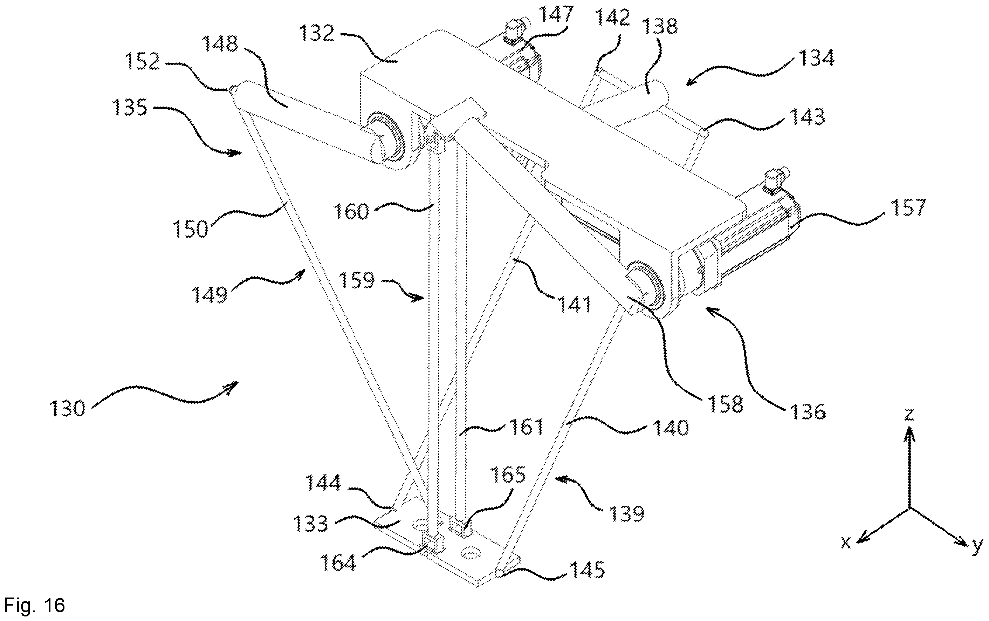

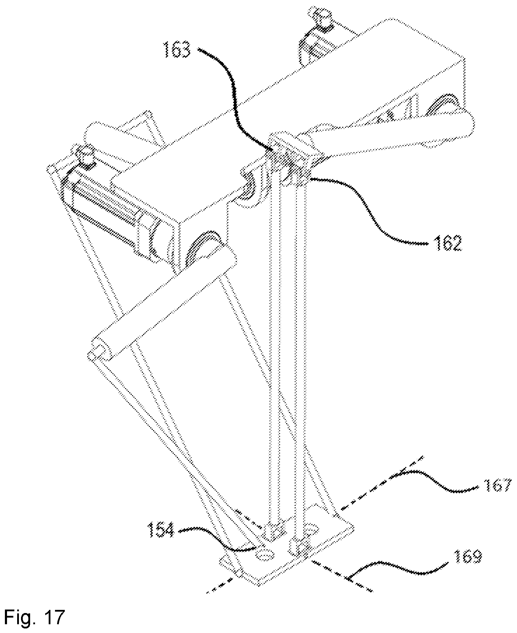

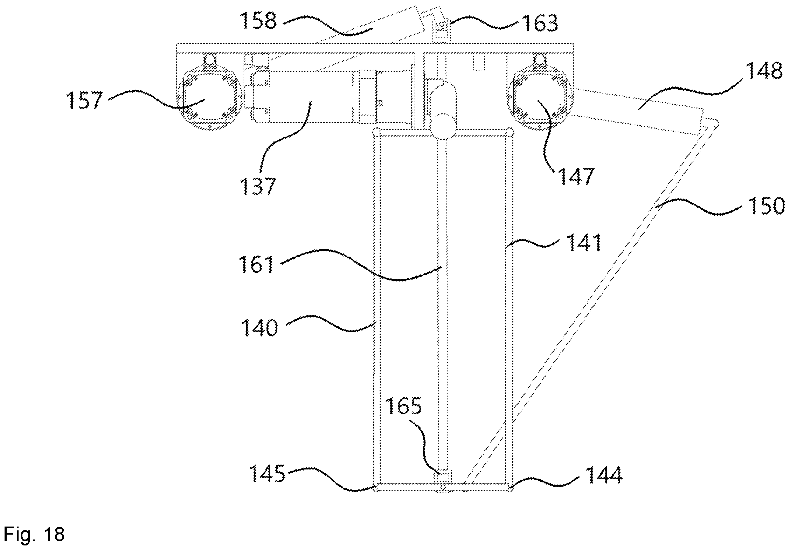

In den Figuren 16 bis 18 ist ein sechstes Ausführungsbeispiel eines Industrieroboters 130 mit einer Roboterbasis 132, einem Effektorträger 133, einem ersten Betätigungsarm 134, einem zweiten Betätigungsarm 135 und einem dritten Betätigungsarm 136 dargestellt. Der erste Betätigungsarm 134 umfasst einen ersten Armantrieb 137, einen mit einer Antriebsachse des ersten Armantriebs 137 verbundenen ersten Oberarm 138 und einen ersten Unterarm 139. Der erste Unterarm 139 weist zwei parallele Stangen 140, 141 auf. Jede der beiden Stangen 140, 141 ist an ihrem dem ersten Oberarm 138 zugewandten Ende über ein erstes Ellbogen-Gelenk 142, 143 mit dem ersten Oberarm 138 beweglich verbunden. Ferner ist jede der beiden Stangen 140, 141 an ihrem dem Effektorträger 133 zugewandten Ende über ein erstes Unterarm-Gelenk 144, 145 mit dem Effektorträger 133 verbunden. Die ersten Ellbogen-Gelenke 142, 143 und die ersten Unterarm-Gelenke 144, 145 sind als sphärische Gelenke ausgebildet. Sie haben mehrere Freiheitsgrade.

Der zweite Betätigungsarm 135 weist einen zweiten Armantrieb 147, einen zweiten Oberarm 148, einen zweiten Unterarm 149 mit nur einer Stange 150 auf. Diese Stange 150 ist über ein zweites Ellbogen-Gelenk 152 mit dem zweiten Oberarm 148 und über ein zweites Unterarm-Gelenk 154 mit dem Effektorträger 133 verbunden. Das zweite Ellbogen-Gelenk 152 und das zweite Unterarm-Gelenk sind sphärische Gelenke.

Der dritte Betätigungsarm 136 weist einen dritten Armantrieb 157, einen dritten Oberarm 158 und einen länglichen Armabschnitt 159 auf, welcher durch zwei Stangen 160, 161 gebildet ist. Jede der beiden Stangen 160, 161 ist über ein drittes Ellbogen-Gelenk 162, 163 mit dem dritten Oberarm 158 und über ein drittes Unterarm-Gelenk 164, 165 mit dem Effektorträger 133 verbunden. Die beiden dritten Ellbogen-Gelenke 162, 163 und die beiden Unterarm-Gelenke 164, 165 sind als Kardangelenke ausgebildet. Jedes dieser Gelenke weist zwei geometrische Gelenkachsen auf, um die es beweglich ist.

Die Anzahl aller Unterarm-Gelenke des ersten Betätigungsarms 134, des zweiten Betätigungsarms 135 und des dritten Betätigungsarms 136 beträgt damit wie bei den vorhergehenden Ausführungsbeispiele fünf.

Eine durch die Zentren der beiden ersten Unterarm-Gelenke 144, 145 verlaufende erste Gerade167 schneidet eine durch die Zentren der beiden dritten Unterarm-Gelenke 164, 165 verlaufende dritte Gerade 169 senkrecht.

Der Vorteil des Industrieroboters gemäß sechstem Ausführungsbeispiel gegenüber den vorhergehenden Ausführungsbeispielen besteht darin, dass sich die Stangen 140, 141 des ersten Unterarms 139, die Stange 150 des zweiten Unterarms 149 und die Stangen 160, 161 des länglichen Armabschnitts 159 des dritten Betätigungsarms bei einer Bewegung des Effektorträgers weniger stark beeinträchtigen, da sie sich nicht so nahe kommen, wie bei den anderen Ausführungsbeispielen.

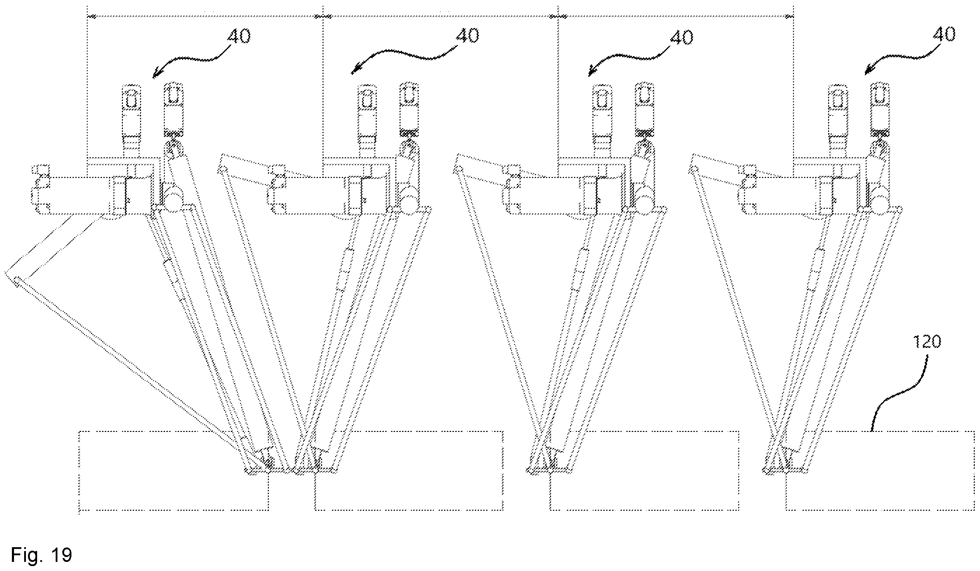

Figur 19 zeigt vier Industrieroboter 40 gemäß zweitem Ausführungsbeispiel in einer Anordnung nebeneinander. Der Abstand zwischen je zwei benachbarten Industrierobotern 40 ist jeweils gleich. Im Bereich der Effektorträger sind die rechteckigen Arbeitsbereiche 120 der Industrieroboter 40 durch gestrichelte Rechtecke dargestellt. Der erste und der zweite Industrieroboter von links sind mit ihren Effektorträgern so eingestellt, dass sich beide Effektorträger am Rand des ihnen zugeordneten Arbeitsbereichs in unmittelbarer Nachbarschaft befinden. Dennoch kollidieren die Betätigungsarme und die Effektorträger der beiden Industrieroboter nicht. Die Darstellung zeigt, dass die Industrieroboter sehr nah nebeneinander oder hintereinander angeordnet werden können, ohne dass sich die Arbeitsbereiche der Betätigungsarme überschneiden. Eine Kollision kann damit ausgeschlossen werden, ohne dass hierzu eine besondere Steuerung benötigt wird.

### Bezugszahlen

- 1: Industrieroboter
- 2: Roboterbasis
- 3: Effektorträger
- 4: Erster Betätigungsarm
- 5: Zweiter Betätigungsarm
- 6: Dritter Betätigungsarm
- 7: Erster Armantrieb
- 8: Erster Oberarm
- 9: Erster Unterarm
- 10: Stange
- 11: Stange
- 12: Erstes Ellbogen-Gelenk
- 13: Erstes Ellbogen-Gelenk
- 14: Erstes Unterarm-Gelenk
- 15: Erstes Unterarm-Gelenk
- 16: Erste geometrische Achse
- 17: zweiter Armantrieb
- 18: zweiter Oberarm
- 19: zweiter Unterarm
- 20: Stange
- 21: Stange
- 22: zweites Ellbogen-Gelenk
- 23: zweites Ellbogen-Gelenk
- 24: zweites Unterarm-Gelenk
- 25: zweites Unterarm-Gelenk
- 26: zweite geometrische Achse
- 27: dritter Armantrieb
- 28: dritter Oberarm
- 29: länglicher Armabschnitt
- 32: drittes Ellbogen-Gelenk
- 33: geometrische Achse der ersten Unterarm-Gelenk-Achse
- 34: drittes Unterarm-Gelenk
- 35: geometrische Achse der zweiten Unterarm-Gelenk-Achse
- 36: dritte geometrische Achse
- 37: erste Gerade
- 38: zweite Gerade
- 39: dritte Gerade
- 40: Industrieroboter
- 41: Erster Effektorantrieb
- 42: Zweiter Effektorantrieb
- 43: Welle
- 50: Industrieroboter
- 53: Effektorträger
- 54: erster Betätigungsarm
- 55: zweiter Betätigungsarm
- 58: erster Oberarm
- 59: erster Unterarm
- 60: Stange
- 61: Stange
- 64: erstes Unterarm-Gelenk
- 65: erstes Unterarm-Gelenk
- 68: zweiter Oberarm
- 69: zweiter Unterarm
- 70: Stange
- 71: Stange
- 74: zweites Unterarm-Gelenk
- 75: zweites Unterarm-Gelenk
- 77: erste Gerade
- 78: zweite Gerade
- 79: dritte Gerade
- 80: Industrieroboter
- 81: Effektorantrieb
- 82: Effektorantrieb
- 83: Welle
- 84: Welle
- 90: Industrieroboter
- 92: Roboterbasis
- 93: Effektorträger
- 96: dritter Betätigungsarm
- 97: dritter Armantrieb
- 99: länglicher Armabschnitt
- 102: drittes Ellbogen-Gelenk
- 106: geometrische Bewegungsachse
- 111: Effektorantrieb
- 112: Effektorantrieb
- 113: Welle
- 114: Welle
- 120: Arbeitsbereich
- 130: Industrieroboter
- 132: Roboterbasis
- 133: Effektorträger
- 134: erster Betätigungsarm
- 135: zweiter Betätigungsarm
- 136: dritter Betätigungsarm
- 137: erster Armantrieb
- 138: erster Oberarm
- 139: erster Unterarm
- 140: Stange
- 141: Stange
- 142: erstes Ellbogen-Gelenk
- 143: erstes Ellbogen-Gelenk
- 144: erstes Unterarm-Gelenk
- 145: erstes Unterarm-Gelenk
- 147: zweiter Armantrieb
- 148: zweiter Oberarm
- 149: zweiter Unterarm
- 150: Stange
- 152: zweites Ellbogen-Gelenk
- 154: zweites Unterarm-Gelenk
- 157: dritter Armantrieb
- 158: dritter Oberarm
- 159: länglicher Armabschnitt
- 160: Stange
- 161: Stange
- 162: drittes Ellbogen-Gelenk
- 163: drittes Ellbogen-Gelenk
- 164: drittes Unterarm-Gelenk
- 165: drittes Unterarm-Gelenk
- 167: erste Gerade
- 169: dritte Gerade

## Patentansprüche

1. Industrieroboter mit Parallelkinematik
mit einer Roboterbasis (2, 92, 132),
mit einem Effektorträger (3, 53, 93, 133), welcher einen Effektor aufnimmt, mit einem ersten Betätigungsarm (4, 54, 134), einem zweiten Betätigungsarm (5, 55, 135) und einem dritten Betätigungsarm (6, 96, 136), wobei jeder Betätigungsarm an einem Ende angetrieben und an der Roboterbasis (2, 92, 132) aufgenommen ist und mit seinem anderen Ende mit dem Effektorträger (3, 53, 133) beweglich verbunden ist, wobei die Betätigungsarme (4, 5, 6, 54, 55, 96, 134, 135, 36) ausgebildet sind, den Effektorträger (3, 53, 93, 133) relativ zu der Roboterbasis (2, 92, 132) in drei Dimensionen im Raum translatorisch zu bewegen,
wobei der erste Betätigungsarm (4, 54, 134) einen an der Roboterbasis (2, 92, 132) angeordneten ersten Armantrieb (7, 137), einen an den ersten Armantrieb (7, 137) gekoppelten ersten Oberarm (8, 58, 138) und einen ersten Unterarm (9, 59, 139) aufweist und der erste Unterarm (9, 59, 139) über mindestens ein erstes Ellbogen-Gelenk (12, 13, 142, 143) mit dem ersten Oberarm (8, 58, 138) und über mindestens ein erstes Unterarm-Gelenk (14, 15, 64, 65, 144, 145) mit dem Effektorträger (3, 53, 93, 133) um mehrere geometrische Achsen beweglich verbunden ist,
wobei der zweite Betätigungsarm (5, 55, 135) einen an der Roboterbasis (2, 92, 132) angeordneten zweiten Armantrieb (17, 147), einen an den zweiten Armantrieb (17, 147) gekoppelten zweiten Oberarm (18, 68, 148) und einen zweiten Unterarm (19, 69, 149) aufweist und der zweite Unterarm (19, 69, 149) über mindestens ein zweites Ellbogen-Gelenk (22, 23, 152) mit dem zweiten Oberarm (18, 68, 148) und über mindestens ein zweites Unterarm-Gelenk (24, 25, 74, 75, 154) mit dem Effektorträger (3, 53, 93, 133) um mehrere geometrische Achsen beweglich verbunden ist,
wobei der dritte Betätigungsarm (6, 96, 136) einen länglichen Armabschnitt (29, 99, 159) aufweist, der an einem Ende unmittelbar oder mittelbar an einen dritten Armantrieb (27, 97, 157) des dritten Betätigungsarms (6, 96, 136) gekoppelt ist und der an seinem anderen Ende über mindestens ein drittes Unterarm-Gelenk (34, 164, 165), welches um zwei Unterarm-Gelenk-Achsen beweglich ist, mit dem Effektorträger (3, 53, 93, 133) verbunden ist,
wobei die Summe der Anzahl der ersten Unterarm-Gelenke (14, 15, 64, 65, 144, 145), der zweiten Unterarm-Gelenke (24, 25, 74, 75, 154) und der dritten Unterarm-Gelenke (34, 164, 165) mindestens drei und höchstens fünf beträgt,
wobei die Zentren von mindestens drei der ersten, zweiten und dritten Unterarm-Gelenke (14, 15, 24, 25, 34, 64, 65, 74, 75, 144, 145, 154, 164, 165) eine Effektorträger-Ebene aufspannen und der Effektorträger (3, 53, 93, 133) durch den dritten Betätigungsarm (6, 96, 136) gegen eine Drehung um eine zu der Effektorträger-Ebene senkrechte z-Achse gesichert ist,
**dadurch gekennzeichnet,**
**dass** der dritte Betätigungsarm (6. 96. 136) in seinem Aufbau von dem ersten Betätigungsarm (4, 54, 134) und von dem zweiten Betätigungsarm (5, 55, 135) abweicht, und
**dass** der erste Betätigungsarm (4, 54, 134) über zwei erste Ellbogen-Gelenke (13, 14, 143, 144) mit dem ersten Oberarm (8, 58, 138) und über zwei erste Unterarm-Gelenke (14, 15, 64, 65) mit dem Effektorträger (3, 53, 93, 133) verbunden ist, welche räumlich versetzt angeordnet sind.

2. Industrieroboter nach Anspruch 1, **dadurch gekennzeichnet, dass** der Effektorträger (3, 53, 93, 133) ausschließlich durch den dritten Betätigungsarm (6, 96, 136) gegen eine Drehung um die z-Achse gesichert ist.

3. Industrieroboter nach Anspruch 1 oder 2, **dadurch gekennzeichnet, dass** das mindestens eine dritte Unterarm-Gelenk (34, 164, 165) um genau zwei Unterarm-Gelenk-Achsen beweglich ist.

4. Industrieroboter nach Anspruch 1, 2 oder 3, **dadurch gekennzeichnet, dass** eine der zwei Unterarm-Gelenk-Achsen, um die das mindestens eine dritte Unterarm-Gelenk (34, 164, 165) beweglich ist, senkrecht zu einer Längsachse des länglichen Armabschnitts (29, 99, 159) des dritten Betätigungsarms (6, 96, 136) ist, und dass die andere Unterarm-Gelenk-Achse des dritten Unterarm-Gelenks (34, 164, 165) parallel zu der Effektorträger-Ebene ist oder in dieser verläuft.

5. Industrieroboter nach einem der vorhergehenden Ansprüche, **dadurch gekennzeichnet, dass** eine zur z-Achse senkrechte x-Achse und eine zur z-Achse senkrechte y-Achse eine xy-Ebene aufspannen, welche parallel zur Effektorträger-Ebene ist oder mit dieser zusammenfällt, dass der erste Betätigungsarm (4, 54, 134) auf den Effektorträger (3, 53, 93, 133) eine beschleunigende Kraft in Richtung der x-Achse ausübt, dass der zweite Betätigungsarm (5, 55, 135) auf den Effektorträger (3, 53, 93, 133) eine beschleunigende Kraft in Richtung der y-Achse ausübt, und dass der dritte Betätigungsarm (6, 96, 136) auf den Effektorträger (3, 53, 93, 133) eine beschleunigende Kraft in Richtung der z-Achse ausübt.

6. Industrieroboter nach Anspruch 5, **dadurch gekennzeichnet, dass** der erste Betätigungsarm (4, 54, 134) den Effektorträger (3, 53, 93, 133) gegen eine Drehung um die x-Achse sichert.

7. Industrieroboter nach Anspruch 5 oder 6, **dadurch gekennzeichnet, dass** der dritte Betätigungsarm (136) den Effektorträger (133) gegen eine Drehung um die z-Achse und um die y-Achse sichert.

8. Industrieroboter nach Anspruch 5, **dadurch gekennzeichnet, dass** der dritte Betätigungsarm den Effektorträger gegen eine Drehung um die z-Achse und um die x-Achse und um die y-Achse sichert.

9. Industrieroboter nach Anspruch 5 oder 6, **dadurch gekennzeichnet, dass** der zweite Betätigungsarm (5, 55) den Effektorträger (3, 53, 93) gegen eine Drehung um die y-Achse sichert.

10. Industrieroboter nach einem der Ansprüche 1 bis 9, **dadurch gekennzeichnet, dass** der zweite Betätigungsarm (135) über genau ein zweites Unterarm-Gelenk (154) mit dem Effektorträger (133) verbunden ist, und dass der dritte Betätigungsarm (136) über zwei dritte Unterarm-Gelenke (164, 165) mit dem Effektorträger (133) verbunden ist, welche räumlich versetzt an dem Effektorträger angeordnet sind.

11. Industrieroboter nach einem der vorhergehenden Ansprüche, **dadurch gekennzeichnet, dass** eine erste Gerade (167), welche die Zentren der beiden ersten Unterarm-Gelenke (144, 145) miteinander verbindet, eine dritte Gerade (169), welche die Zentren der beiden dritten Unterarm-Gelenke (164, 165) miteinander verbindet, senkrecht schneidet.

12. Industrieroboter nach einem der Ansprüche 1 bis 9, **dadurch gekennzeichnet, dass** der zweite Betätigungsarm (5, 55) über zwei zweite Unterarm-Gelenke (24, 25, 74, 75) mit dem Effektorträger (3, 53, 93) verbunden ist, welche räumlich versetzt angeordnet sind, und dass der dritte Betätigungsarm (6, 96) über genau ein drittes Unterarm-Gelenk (34) mit dem Effektorträger (3, 53, 93) verbunden ist, welches um genau zwei Unterarm-Gelenk-Achsen beweglich ist.

13. Industrieroboter nach Anspruch 12, **dadurch gekennzeichnet, dass** eine erste Gerade (37, 77), welche die Zentren der beiden ersten Unterarm-Gelenke (14, 15, 64, 65) miteinander verbindet, eine zweite Gerade (38, 78), welche die Zentren der beiden zweiten Unterarm-Gelenke (24, 25, 64, 75) miteinander verbindet, senkrecht schneidet.

14. Industrieroboter nach Anspruch 13, **dadurch gekennzeichnet, dass** eine Gerade (39, 79), welche senkrecht zu der Effektorträger-Ebene ist und durch ein Zentrum des dritten Unterarm-Gelenks (34) verläuft, die zweite Gerade (38, 78) schneidet.

15. Industrieroboter nach Anspruch 14, **dadurch gekennzeichnet, dass** sich die erste Gerade (77), die zweite Gerade (78) und die Gerade (79), welche zu der Effektorträger-Ebene senkrecht ist und durch das Zentrum des dritten Unterarm-Gelenks verläuft, in einem Punkt schneiden.

16. Industrieroboter nach einem der vorhergehenden Ansprüche, **dadurch gekennzeichnet, dass** der erste Armantrieb (7, 137) und der zweite Armantrieb (17, 147) Rotationsantriebe sind, dass eine erste Antriebsachse des ersten Armantriebs und eine zweite Antriebsachse des zweiten Armantriebs im wesentlichen senkrecht zueinander verlaufen.

17. Industrieroboter nach einem der vorhergehenden Ansprüche, **dadurch gekennzeichnet, dass** der dritte Armantrieb (27, 157) ein Rotationsantrieb ist, dass an den Rotationsantrieb ein dritter Oberarm (28, 158) gekoppelt ist und der dritte Oberarm (28, 158) über mindestens ein drittes Ellbogen-Gelenk (32, 162, 63) um genau zwei Achsen beweglich mit dem länglichen Armabschnitt (29, 159) des dritten Betätigungsarms (6, 136) verbunden ist.

18. Industrieroboter nach Anspruch 16 oder 17, **dadurch gekennzeichnet, dass** die erste Antriebsachse und die zweite Antriebsachse eine Antriebsebene aufspannen, und dass eine dritte Antriebsachse des dritten Armantriebs in der Antriebsebene verläuft.

19. Industrieroboter nach Anspruch 18, **dadurch gekennzeichnet, dass** die dritte Antriebsachse senkrecht zu der ersten Antriebsachse oder senkrecht zu der zweiten Antriebsachse verläuft.

20. Industrieroboter nach einem der Ansprüche 1 bis 16, **dadurch gekennzeichnet, dass** der dritte Armantrieb (97) ein Linearantrieb ist, dessen Antriebsachse über ein um genau zwei Achsen bewegliches drittes Ellbogen-Gelenk (102) mit dem länglichen Armabschnitt (99) des dritten Betätigungsarms (96) verbunden ist.

21. Industrieroboter nach einem der Ansprüche 1 bis 16, **dadurch gekennzeichnet, dass** der dritte Armantrieb ein Linearantrieb ist, der an der Roboterbasis beweglich über ein als Kardangelenk ausgebildetes Gelenk aufgenommen ist, und dass der längliche Armabschnitt des dritten Betätigungsarms an eine linear bewegte Antriebsachse des Linearantriebs gekoppelt ist.

22. Industrieroboter nach Anspruch 20 oder 21, **dadurch gekennzeichnet, dass** die Antriebsachse des Linearantriebs gegen eine Drehung um eine Achse gesichert ist, welche entlang einer linearen geometrischen Bewegungsachse des Linearantriebs verläuft.

23. Industrieroboter nach einem der vorhergehenden Ansprüche, **dadurch gekennzeichnet, dass** das mindestens eine dritte Unterarm-Gelenk (34, 164, 165) oberhalb der Effektorträger-Ebene angeordnet ist.

24. Industrieroboter nach einem der Ansprüche 1 bis 22, **dadurch gekennzeichnet, dass** sich ein Zentrum des mindestens einen dritten Unterarm-Gelenks (34, 164, 165) in der Effektorträger-Ebene befindet.

25. Industrieroboter nach einem der vorhergehenden Ansprüche, **dadurch gekennzeichnet, dass** das mindestens eine erste Unterarm-Gelenk (14, 15, 64, 65, 144, 145) und das mindestens eine zweite Unterarm-Gelenk (24, 25, 74, 75, 154) seitlich an dem Effektorträger (3, 53, 93, 133) angeordnet sind und dass das mindestens eine dritte Unterarm-Gelenk (34, 164, 165) an der der Roboterbasis (2, 132) zugewandten Seite des Effektorträgers (3, 53, 93, 133) angeordnet ist.

26. Industrieroboter nach einem der vorhergehenden Ansprüche, **dadurch gekennzeichnet, dass** das mindestens eine dritte Unterarm-Gelenk (34, 164, 165) ein Kardangelenk ist.

27. Industrieroboter nach einem der vorhergehenden Ansprüche, **dadurch gekennzeichnet, dass** der längliche Armabschnitt (29, 99, 159) des dritten Betätigungsarms (6, 96, 136) an seinem dem Effektorträger (3, 53, 93, 133) abgewandten Ende mit einem Kardangelenk (32, 162, 163) ausgestattet ist.

28. Industrieroboter nach einem der vorhergehenden Ansprüche, **dadurch gekennzeichnet, dass** der längliche Armabschnitt (29,99, 159) des dritten Betätigungsarms (6, 96, 136) als länglicher Hohlkörper ausgebildet ist.

29. Industrieroboter nach Anspruch 28, **dadurch gekennzeichnet, dass** in dem länglichen Armabschnitt (29, 99, 159) Versorgungsleitungen eines an dem Effektorträger (3, 53, 93, 133) angeordneten Effektors aufgenommen sind.

30. Industrieroboter nach einem der vorhergehenden Ansprüche, **dadurch gekennzeichnet, dass** er eine Effektorantriebsachse aufweist, welche einen an dem Effektorträger (3, 53, 93) angeordneten Effektor bewegt, dass die Effektorantriebsachse einen Effektorantrieb (41, 81, 82, 111, 112) aufweist, welcher an dem dritten Betätigungsarm (6, 96) angeordnet ist.

31. Industrieroboter nach Anspruch 28 oder Anspruch 30, **dadurch gekennzeichnet, dass** die Effektorantriebsachse zumindest abschnittsweise in dem länglichen Armabschnitt (29) des dritten Betätigungsarms (6) verläuft.

## Claims

1. Industrial robot with parallel kinematics
with a robot base (2, 92, 132),
with an effector carrier (3, 53, 93, 133) receiving an effector,
with a first actuating arm (4, 54, 134), a second actuating arm (5, 55, 135) and a third actuating arm (6, 96, 136), wherein each actuating arm with its one end is driven and received on the robot base (2, 92, 132) and with its other end is movably connected to the effector carrier (3, 53, 133),
wherein the actuating arms (4, 5, 6, 54, 55, 96, 134, 135, 36) are adapted to move the effector carrier (3, 53, 93, 133) translationally in three dimensions in space relative to the robot base (2, 92, 132),
wherein the first actuating arm (4, 54, 134) comprises a first arm drive (7, 137) arranged on the robot base (2, 92, 132), a first upper arm (8, 58, 138) coupled to the first arm drive (7, 137) and a first lower arm (9, 59, 139),
wherein the first lower arm (9, 59, 139) is movably connected to the first upper arm (8, 58, 138) via at least one first elbow joint (12, 13, 142, 143) and to the effector carrier (3, 53, 93, 133) via at least one first lower arm joint (14, 15, 64, 65, 144, 145) so as to be movable about multiple geometric axes,
wherein the second actuating arm (5, 55, 135) comprises a second arm drive (17, 147) arranged on the robot base (2, 92, 132), a second upper arm (18, 68, 148) coupled to the second arm drive (17, 147) and a second lower arm (19, 69, 149), and the second lower arm (19, 69, 149) is movably connected to the second upper arm (18, 68, 148) via at least one second elbow joint (22, 23, 152) and to the effector carrier (3, 53, 93, 133) via at least one second lower arm joint (24, 25, 74, 75, 154) so as to be movable about multiple geometric axes,
wherein the third actuating arm (6, 96, 136) comprises an elongated arm section (29, 99, 159) which is directly or indirectly coupled at one end to a third arm drive (27, 97, 157) of the third actuating arm (6, 96, 136) and
which is connected at its other end to the effector carrier (3, 53, 93, 133) via at least one third lower arm joint (34, 164, 165) which is movable about two lower arm joint axes,
wherein the sum of the number of the first lower arm joints (14, 15, 64, 65, 144, 145), the second lower arm joints (24, 25, 74, 75, 154) and the third lower arm joints (34, 164, 165) is at least three and at most five,
wherein the centers of at least three of the first, second and third lower arm joints (14, 15, 24, 25, 34, 64, 65, 74, 75, 144, 145, 154, 164, 165) span an effector carrier plane and the effector carrier (3, 53, 93, 133) is secured against rotation about a z-axis perpendicular to the effector carrier plane by the third actuating arm (6, 96, 136),
**characterized in that**
the third actuating arm (6, 96, 136) differs in structure from the first actuating arm and from the second actuating arm (5, 55, 135), and that the first actuating arm (4, 54, 134) is connected to the first upper arm (8, 58, 138) via two first elbow joints (13, 14, 143, 144) and to the effector carrier (3, 53, 93, 133) via two first lower arm joints (14, 15, 64, 65), which are arranged spatially offset.

2. Industrial robot according to claim 1, **characterized in that** the effector carrier (3, 53, 93, 133) is secured against rotation about the z-axis exclusively by the third actuating arm (6, 96, 136).

3. Industrial robot according to claim 1 or 2, **characterized in that** the at least one third lower arm joint (34, 164, 165) is movable about exactly two lower arm joint axes.

4. Industrial robot according to claim 1, 2 or 3, **characterized in that** one of the two lower arm joint axes about which the at least one third lower arm joint (34, 164, 165) is movable is perpendicular to a longitudinal axis of the elongated arm section (29, 99, 159) of the third actuating arm (6, 96, 136), and that the other lower arm joint axis of the third forearm joint (34, 164, 165) is parallel to or extends in the effector carrier plane.

5. Industrial robot according to any one of the preceding claims, **characterized in that** an x-axis perpendicular to the z-axis and a y-axis perpendicular to the z-axis span an xy-plane which is parallel to or coincides with the effector carrier plane, that the first actuating arm (4, 54, 134) applies an accelerating force to the effector carrier (3, 53, 93, 133) in the direction of the x-axis, that the second actuating arm (5, 55, 135) applies an accelerating force on the effector carrier (3, 53, 93, 133) in the direction of the y-axis, and that the third actuating arm (6, 96, 136) applies an accelerating force on the effector carrier (3, 53, 93, 133) in the direction of the z-axis.

6. Industrial robot according to claim 5, **characterized in that** the first actuating arm (4, 54, 134) secures the effector carrier (3, 53, 93, 133) against rotation about the x-axis.

7. Industrial robot according to claim 5 or 6, **characterized in that** the third actuating arm (136) secures the effector carrier (133) against rotation about the z-axis and about the y-axis.

8. Industrial robot according to claim 5, **characterized in that** the third actuating arm secures the effector carrier against rotation about the z-axis and about the x-axis and about the y-axis.

9. Industrial robot according to claim 5 or 6, **characterized in that** the second actuating arm (5, 55) secures the effector carrier (3, 53, 93) against rotation about the y-axis.

10. Industrial robot according to any one of claims 1 to 9, **characterized in that** the second actuating arm (135) is connected to the effector carrier (133) via exactly one second lower arm joint (154), and that the third actuating arm (136) is connected to the effector carrier (133) via two third lower arm joints (164, 165), which are arranged spatially offset on the effector carrier.

11. Industrial robot according to any one of the preceding claims, **characterized in that** a first straight line (167), which connects the centers of the two first lower arm joints (144, 145) to one another, perpendicularly intersects a third straight line (169), which connects the centers of the two third lower arm joints (164, 165) to one another.

12. Industrial robot according to any one of claims 1 to 9, **characterized in that** the second actuating arm (5, 55) is connected to the effector carrier (3, 53, 93) via two second lower arm joints (24, 25, 74, 75), which are arranged spatially offset, and **in that** the third actuating arm (6, 96) is connected to the effector carrier (3, 53, 93) via exactly one third lower arm joint (34), which can be moved about exactly two lower arm joint axes.

13. Industrial robot according to claim 12, **characterized in that** a first straight line (37, 77) connecting the centers of the two first lower arm joints (14, 15, 64, 65) perpendicularly intersects a second straight line (38, 78) connecting the centers of the two second lower arm joints (24, 25, 64, 75).

14. Industrial robot according to claim 13, **characterized in that** a straight line (39, 79), which is perpendicular to the effector carrier plane and passes through a center of the third lower arm joint (34), intersects the second straight line (38, 78).

15. Industrial robot according to claim 14, **characterized in that** the first straight line (77), the second straight line (78) and the straight line (79), which is perpendicular to the effector carrier plane and passes through the center of the third lower arm joint, intersect at one point.

16. Industrial robot according to any one of the preceding claims,
**characterized in that** the first arm drive (7, 137) and the second arm drive (17, 147) are rotary drives, that a first drive axis of the first arm drive and a second drive axis of the second arm drive are substantially perpendicular to each other.

17. Industrial robot according to any one of the preceding claims,
**characterized in that** the third arm drive (27, 157) is a rotary drive, **in that** a third upper arm (28, 158) is coupled to the rotary drive and the third upper arm (28, 158) is movably connected to the elongate arm section (29, 159) of the third actuating arm (6, 136) via at least one third elbow joint (32, 162, 63) so as to be movable about exactly two axes.

18. Industrial robot according to claims 16 or 17, **characterized in that** the first drive axis and the second drive axis span a drive plane, and **in that** a third drive axis of the third actuating arm extends in the drive plane.

19. Industrial robot according to claim 18, **characterized in that** the third drive axis is perpendicular to the first drive axis or perpendicular to the second drive axis.

20. Industrial robot according to any one of claims 1 to 16, **characterized in that** the third arm drive (97) is a linear drive, the drive axis of which is connected to the elongated arm section (99) of the third actuating arm (96) via a third elbow joint (102) which is movable about exactly two axes.

21. Industrial robot according to any one of claims 1 to 16, **characterized in that** the third arm drive is a linear drive which is received movably on the robot base via a joint designed as a cardan joint, and **in that** the elongated arm portion of the third actuating arm is coupled to a linearly movable drive axis of the linear drive.

22. Industrial robot according to claim 20 or 21, **characterized in that** the drive axis of the linear actuator is secured against rotation about an axis extending along a linear geometric axis of movement of the linear actuator.

23. Industrial robot according to any one of the preceding claims, **characterized in that** the at least one third lower arm joint (34, 164, 165) is arranged above the effector carrier plane.

24. Industrial robot according to any one of claims 1 to 22, **characterized in that** a center of the at least one third lower arm joint (34, 164, 165) is located in the effector carrier plane.

25. Industrial robot according to any one of the preceding claims, **characterized in that** the at least one first lower arm joint (14, 15, 64, 65, 144, 145) and the at least one second lower arm joint (24, 25, 74, 75, 154) are arranged laterally on the effector carrier (3, 53, 93, 133) and that the at least one third lower arm joint (34, 164, 165) is arranged on the side of the effector carrier (3, 53, 93, 133) facing the robot base (2, 132).

26. Industrial robot according to any one of the preceding claims, **characterized in that** the at least one third lower arm joint (34, 164, 165) is a cardan joint.

27. Industrial robot according to any one of the preceding claims, **characterized in that** the elongated arm section (29, 99, 159) of the third actuating arm (6, 96, 136) is provided with a cardan joint (32, 162, 163) at its end facing away from the effector carrier (3, 53, 93, 133).

28. Industrial robot according to any one of the preceding claims, **characterized in that** the elongated arm section (29, 99, 159) of the third actuating arm (6, 96, 136) is designed as an elongated hollow body.

29. Industrial robot according to claim 28, **characterized in that** supply lines of an effector arranged on the effector carrier (3, 53, 93, 133) are accommodated in the elongated arm section (29, 99, 159).

30. Industrial robot according to any one of the preceding claims, **characterized in that** it has an effector drive axis which moves an effector arranged on the effector carrier (3, 53, 93), **in that** the effector drive axis comprises an effector drive (41, 81, 82, 111, 112) which is arranged on the third actuating arm (6, 96).

31. Industrial robot according to claim 28 or claim 30, **characterized in that** the effector drive axis extends at least in sections in the elongated arm section (29) of the third actuating arm (6).

## Revendications

1. Robot industriel à cinématique parallèle
avec une base du robot (2, 92, 132) ;
avec un support d'effecteur (3, 53, 93, 133) qui reçoit un effecteur,
avec un premier bras d'actionnement (4, 54, 134), un deuxième bras d'actionnement (5, 55, 135) et un troisième bras d'actionnement (6, 96, 136), chaque bras d'actionnement étant entraîné à une extrémité et reçu sur la base du robot (2, 92, 132) et étant relié de façon mobile par son autre extrémité au support d'effecteur (3, 53, 133), les bras d'actionnement (4, 5, 6, 54, 55, 96, 134, 135, 36) étant conçus pour déplacer en translation le support d'effecteur (3, 53, 93, 133) par rapport à la base de robot (2, 92, 132) en trois dimensions dans l'espace,
le premier bras d'actionnement (4, 54, 134) comprenant un premier entraînement de bras (7, 137) à la base du robot (2, 92, 132), un premier haut de bras (8, 58, 138) couplé au premier entraînement de bras (7, 137) et un premier avant-bras (9, 59, 139), le premier avant-bras (9, 59, 139) étant relié de façon mobile autour de plusieurs axes géométriques par au moins une première articulation de coude (12, 13, 142, 143) au premier haut de bras (8, 58, 138) et par au moins une première articulation d'avant-bras (14, 15, 64, 65, 144, 145) au support d'effecteur (3, 53, 93, 133),
le deuxième bras d'actionnement (5, 55, 135) comprenant un deuxième entraînement de bras (17, 147) sur la base du robot (2, 92, 132), un deuxième haut de bras (18, 68, 148) couplé au deuxième entraînement de bras (17, 147) et un deuxième avant-bras (19, 69, 149), le deuxième avant-bras (19, 69, 149) étant relié de façon mobile autour de plusieurs axes géométriques par au moins une deuxième articulation de coude (22, 23, 152) au deuxième haut de bras (18, 68, 148) et par au moins une deuxième articulation d'avant-bras (24, 25, 74, 75, 154) au support d'effecteur (3, 53, 93, 133),
le troisième bras d'actionnement (6, 96, 136) comprenant une section de bras allongée (29, 99, 159) qui est couplée à une extrémité directement ou indirectement à un troisième entraînement de bras (27, 97, 157) du troisième bras d'actionnement (6, 96, 136) et qui est reliée à son autre extrémité au support d'effecteur (3, 53, 93, 133) par le biais d'au moins une troisième articulation d'avant-bras (34, 164, 165) qui est mobile autour de deux axes d'articulation d'avant-bras,
la somme du nombre des premières articulations d'avant-bras (14, 15, 64, 65, 144, 145), des deuxièmes articulations d'avant-bras (24, 25, 74, 75, 154) et des troisièmes articulations d'avant-bras (34, 164, 165) étant d'au moins trois et d'au plus cinq,
les centres d'au moins trois des premières, deuxièmes et troisièmes articulations d'avant-bras (14, 15, 24, 25, 34, 64, 65, 74, 75, 144, 145, 154, 164, 165) établissant un plan de support d'effecteur et le support d'effecteur (3, 53, 93, 133) étant bloqué par le troisième bras d'actionnement (6, 96, 136) contre une rotation autour d'un axe z, perpendiculaire au plan de support d'effecteur,
**caractérisé en ce que**
le troisième bras d'actionnement (6, 96, 136) diffère dans sa structure du premier bras d'actionnement (4, 54, 134) et du deuxième bras d'actionnement (5, 55, 135) et
**en ce que** le premier bras d'actionnement (4, 54, 134) est relié par le biais de deux premières articulations de coude (13, 14, 143, 144) au premier haut de bras (8, 58, 138) et par le biais de deux premières articulations d'avant-bras (14, 15, 64, 65) au support d'effecteur (3, 53, 93, 133), ces articulations étant disposées de façon décalée.

2. Robot industriel selon la revendication 1, **caractérisé en ce que** le support d'effecteur (3, 53, 93, 133) est bloqué contre une rotation autour de l'axe z exclusivement par le troisième bras d'actionnement (6, 96, 136) .

3. Robot industriel selon la revendication 1 ou 2, **caractérisé en ce qu'**au moins une troisième articulation d'avant-bras (34, 164, 165) est mobile autour d'exactement deux axes d'articulation d'avant-bras.

4. Robot industriel selon la revendication 1, 2 ou 3, **caractérisé en ce que** l'un des deux axes d'articulation d'avant-bras autour duquel au moins une troisième articulation d'avant-bras (34, 164, 165) est mobile, est perpendiculaire à un axe longitudinal de la partie de bras allongée (29, 99, 159) du troisième bras d'actionnement (6, 96, 136), et **en ce que** l'autre axe de la troisième articulation d'avant-bras (34, 164, 165) est parallèle au plan de support d'effecteur ou passe par ce plan.

5. Robot industriel selon l'une des revendications précédentes, **caractérisé en ce qu'**un axe x perpendiculaire à l'axe z et un axe y perpendiculaire à l'axe z établissent un plan xy parallèle ou confondu avec le plan du support d'effecteur **en ce que** le premier bras d'actionnement (4, 54, 134) exerce sur le support d'effecteur (3, 53, 93, 133) une force d'accélération dans la direction de l'axe x, que le deuxième bras d'actionnement (5, 55, 135) exerce sur le support d'effecteur (3, 53, 93, 133) une force d'accélération dans la direction de l'axe y et que le troisième bras d'actionnement (6, 96, 136) exerce sur le support d'effecteur (3, 53, 93, 133) une force d'accélération dans la direction de l'axe z.

6. Robot industriel selon la revendication 5, **caractérisé en ce que** le premier bras d'actionnement (4, 54, 134) bloque le support d'effecteur (3, 53, 93, 133) contre une rotation autour de l'axe x.

7. Robot industriel selon la revendication 5 ou 6, **caractérisé en ce que** le troisième bras d'actionnement (136) bloque le support d'effecteur (133) contre une rotation autour de l'axe z et de l'axe y.

8. Robot industriel selon la revendication 5, **caractérisé en ce que** le troisième bras d'actionnement bloque le support d'effecteur contre une rotation autour de l'axe z, de l'axe x et de l'axe y.

9. Robot industriel selon la revendication 5 ou 6, **caractérisé en ce que** le deuxième bras d'actionnement (5, 55) bloque le support d'effecteur (3, 53, 93) contre une rotation autour de l'axe y.

10. Robot industriel selon l'une des revendications 1 à 9, **caractérisé en ce que** le deuxième bras d'actionnement (135) est relié au support d'effecteur (133) par exactement une deuxième articulation d'avant-bras (154) et **en ce que** le troisième bras d'actionnement (136) est relié au support d'effecteur (133) par deux troisièmes articulations d'avant-bras (164, 165), qui sont disposées de façon décalée dans l'espace sur le support d'effecteur.

11. Robot industriel selon l'une des revendications précédentes, **caractérisé en ce qu'**une première droite (167), qui relie les centres des deux premières articulations d'avant-bras (144, 145), coupe perpendiculairement une troisième droite (169), qui relie les centres des deux troisièmes articulations d'avant-bras (164, 165).

12. Robot industriel selon l'une des revendications 1 à 9, **caractérisé en ce que** le deuxième bras d'actionnement (5, 55) est relié au support d'effecteur (3, 53, 93) par deux deuxièmes articulations d'avant-bras (24, 25, 74, 75), qui sont décalées dans l'espace, et **en ce que** le troisième bras d'actionnement (6, 96) est relié au support d'effecteur (3, 53, 93) par exactement une troisième articulation d'avant-bras (34), qui est mobile autour d'exactement deux axes d'articulation d'avant-bras.

13. Robot industriel selon la revendication 12, **caractérisé en ce qu'**une première droite (37, 77), qui relie les centres des deux premières articulations d'avant-bras (14, 15, 64, 65), croise perpendiculairement une deuxième droite (38, 78), qui relie les centres des deux deuxièmes articulations d'avant-bras (24, 25, 64, 75).

14. Robot industriel selon la revendication 13, **caractérisé en ce qu'**une droite (39, 79), perpendiculaire au plan du support d'effecteur et qui passe par un centre de la troisième articulation d'avant-bras (34), croise la deuxième droite (38, 78).

15. Robot industriel selon la revendication 14, **caractérisé en ce que** la première droite (77), la deuxième droite (78) et la droite (79), qui est perpendiculaire au plan de support d'effecteur et qui passe par le centre de la troisième articulation d'avant-bras, se croisent à un point.

16. Robot industriel selon l'une des revendications précédentes, **caractérisé en ce que** le premier entraînement de bras (7, 137) et le deuxième entraînement de bras (17, 147) sont des entraînements de rotation, **en ce qu'**un premier axe d'entraînement du premier entraînement de bras et un deuxième axe d'entraînement du deuxième entraînement de bras sont essentiellement perpendiculaires l'un à l'autre.

17. Robot industriel selon l'une des revendications précédentes, **caractérisé en ce que** le troisième entraînement de bras (27, 157) est un entraînement de rotation, **en ce qu'**un troisième haut de bras (28, 158) est couplé à l'entraînement de rotation et **en ce que** le troisième haut de bras (28, 158) est relié à la section longitudinale (29, 159) du troisième bras d'actionnement (6, 136) par au moins une troisième articulation de coude (32, 162, 63) de façon mobile autour d'exactement deux axes.

18. Robot industriel selon la revendication 16 ou 17, **caractérisé en ce que** le premier axe d'entraînement et le deuxième axe d'entraînement établissent un plan d'entraînement, et **en ce qu'**un troisième axe du troisième bras d'entraînement passe par le plan d'entraînement.

19. Robot industriel selon la revendication 18, **caractérisé en ce que** le troisième axe d'entraînement est perpendiculaire au premier axe d'entraînement ou perpendiculaire au deuxième axe d'entraînement.

20. Robot industriel selon les revendications 1 à 16, **caractérisé en ce que** le troisième entraînement de bras (97) est un entraînement linéaire dont l'axe est relié à la portion de bras allongée (99) du troisième bras d'actionnement (96) par une troisième articulation de coude (102) mobile autour d'exactement deux axes.

21. Robot industriel selon l'une des revendications 1 à 16, **caractérisé en ce que** le troisième entraînement de bras est un entraînement linéaire qui est reçu de manière mobile sur la base du robot par l'intermédiaire d'une articulation conçue comme un joint de cardan, et **en ce que** la portion de bras allongée du troisième bras d'actionnement est couplée à un axe d'entraînement à déplacement linéaire de l'entraînement linéaire.

22. Robot industriel selon la revendication 20 ou 21, **caractérisé en ce que** l'axe de l'entraînement linéaire est bloqué en rotation autour d'un axe qui s'étend le long d'un axe de déplacement géométrique linéaire de l'entraînement linéaire.

23. Robot industriel selon l'une des revendications précédentes, **caractérisé en ce qu'**au moins une troisième articulation d'avant-bras (34, 164, 165) est disposée au-dessus du plan de support d'effecteur.

24. Robot industriel selon l'une des revendications 1 à 22, **caractérisé en ce qu'**un centre d'au moins une troisième articulation d'avant-bras (34, 164, 165) se trouve dans le plan de support d'effecteur.

25. Robot industriel selon l'une des revendications précédentes, **caractérisé en ce qu'**au moins une première articulation d'avant-bras (14, 15, 64, 65, 144, 145) et au moins une deuxième articulation d'avant-bras (24, 25, 74, 75, 154) sont disposées latéralement sur le support d'effecteur (3, 53, 93, 133) et **en ce qu'**au moins une troisième articulation d'avant-bras (34, 164, 165) est disposée sur le côté du support d'effecteur (3, 53, 93, 133) tourné vers la base du robot (2, 132).

26. Robot industriel selon l'une des revendications précédentes, **caractérisé en ce qu'**au moins une troisième articulation d'avant-bras (34, 164, 165) est un joint de cardan.

27. Robot industriel selon l'une des revendications précédentes, **caractérisé en ce que** la portion de bras allongée (29, 99, 159) du troisième bras d'actionnement (6, 96, 136) est dotée sur son extrémité opposée au support d'effecteur (3, 53, 93, 133) d'un joint à cardan (32, 162, 163).

28. Robot industriel selon l'une des revendications précédentes, **caractérisé en ce que** la portion de bras allongée (29, 99, 159) du troisième bras d'actionnement (6, 96, 136) est un corps creux longitudinal.

29. Robot industriel selon la revendication 28, **caractérisé en ce que**, dans la portion de bras allongée (29, 99, 159), se trouvent des câbles d'alimentation d'un effecteur monté sur le support (3, 53, 93, 133).

30. Robot industriel selon l'une des revendications précédentes, **caractérisé en ce qu'**il présente un axe d'entraînement d'effecteur qui déplace un effecteur monté sur le support d'effecteur (3, 53, 93), et **en ce que** l'axe d'entraînement présente un entraînement d'effecteur (41, 81, 82, 111, 112) placé sur le troisième bras d'actionnement (6, 96).

31. Robot industriel selon la revendication 28 ou 30, **caractérisé en ce que** l'axe d'entraînement d'effecteur passe au moins en partie dans la portion de bras allongée (29) du troisième bras d'actionnement (6).
